# EUROPEAN PATENT SPECIFICATION

(11) **EP 2 365 442 B1**
(45) Date of publication and mention of the grant of the patent: **08.04.2015**
(21) Application number: 10014568.9
(22) Date of filing: 12.11.2010
(51) Int. Cl.: G06F 12/08, G06F 17/30, H04L 29/08, H04L 29/06

(54) **Computer system and method of data cache management**
Computersystem und Verfahren zur Datencacheverwaltung
Système informatique et procédé de gestion de cache de données

(30) Priority: 11.03.2010 JP 2010054749
(43) Date of publication of application: 14.09.2011
(73) Proprietor: Hitachi, Ltd., Chiyoda-ku Tokyo 100-8280 (JP)
(72) Inventor: Ito, Daisuke, Tokyo 100-8220 (JP); Tsushima, Yuji, Tokyo 100-8220 (JP); Hayakawa, Hitoshi, Tokyo 100-8220 (JP)
(74) Representative: Strehl Schübel-Hopf & Partner

(56) References cited:
- US-A1- 2002 095 403
- US-A1- 2007 162 462
- JIAN LIANG ET AL: "Minimizing Metadata Access Latency in Wide Area Networked File Systems", 1 January 2006 (2006-01-01), HIGH PERFORMANCE COMPUTING - HIPC 2006 LECTURE NOTES IN COMPUTER SCIENCE;;LNCS, SPRINGER, BERLIN, DE, PAGE(S) 301 - 312, XP019052568, ISBN: 978-3-540-68039-0 * abstract * * page 301, line 1 - page 305, line 11 * * figures 1, 3 *
- NELSON M N ET AL: "CACHING IN THE SPRITE NETWORK FILE SYSTEM", ACM TRANSACTIONS ON COMPUTER SYSTEMS, ACM, NEW YORK, NY, US, vol. 6, no. 1, 1 February 1988 (1988-02-01), pages 134-154, XP000005701, ISSN: 0734-2071, DOI: DOI:10.1145/35037.42183

## Description

### BACKGROUND OF THE INVENTION

This invention relates to a method of data cache management for a file system, or for an object store typified by a key-value store.

Data access between a data center and a business location over a Wide Area Network (WAN) has problems. One problem is a transfer latency, which depends on the distance between the two. The other problem is that data transfer speed is slow, because of the effective bandwidth of the WAN is significantly small relative to the contract bandwidth (subscriber bandwidth).

A cache is used to deal with the problems. There are two types of cache: one is a read cache for speeding up reading a file that is not updated or a file that is updated infrequently; and the other is a write cache for speeding up reading a file that is frequently updated and the update of a file. In an environment where a plurality of users updates the same data, the consistency between actual data and cached data needs to be controlled.

### [Normal Cache]

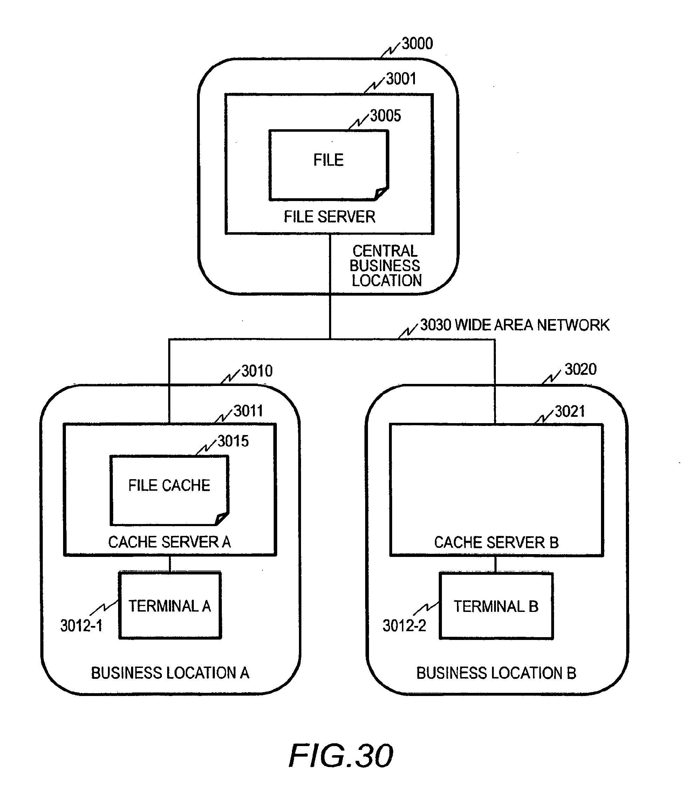

The consistency control is accomplished by synchronizing data with the use of a server that holds data (see, for example, Nelson, "Caching in the Sprite Network File System," ACM Transactions on Computer Systems, Volume 6, Issue 1, February 1988, pp. 134-154 ). This method is described below with reference to FIGS. 30, 31, and 32 taking as an example a case where a file server is used as the server that holds data.

FIG. 30 is a block diagram illustrating a configuration example of a computer system that includes a conventional file server.

The computer system includes a central business location 3000, a business location A 3010, and a business location B 3020, which are coupled to one another via a Wide Area Network (WAN) 3030.

The central business location 3000 includes a file server 3001. The file server 3001 stores a file 3005, which is read or updated by each business locations.

The business location A 3010 includes a cache server A 3011 and a terminal A 3012-1. The cache server A 3011 and the terminal A 3012-1 are coupled to each other directly, or via a Local Area Network (LAN) or the like. Through the cache server A 3011, the terminal A 3012-1 reads and updates the file 3005 stored on the file server 3001 of the central business location 3000.

The business location B 3020 includes a cache server B 3021 and a terminal B 3012-2. The cache server B 3021 and the terminal B 3012-2 are coupled to each other directly, or via a Local Area Network (LAN) or the like. Through the cache server B 3021, the terminal B 3012-2 reads and updates the file 3005 stored on the file server 3001 of the central business location 3000.

Described below is a case in which the cache server A 3011 stores a file cache 3015, which corresponds to the file 3005 stored on the file server 3001. The file cache 3015 is latest.

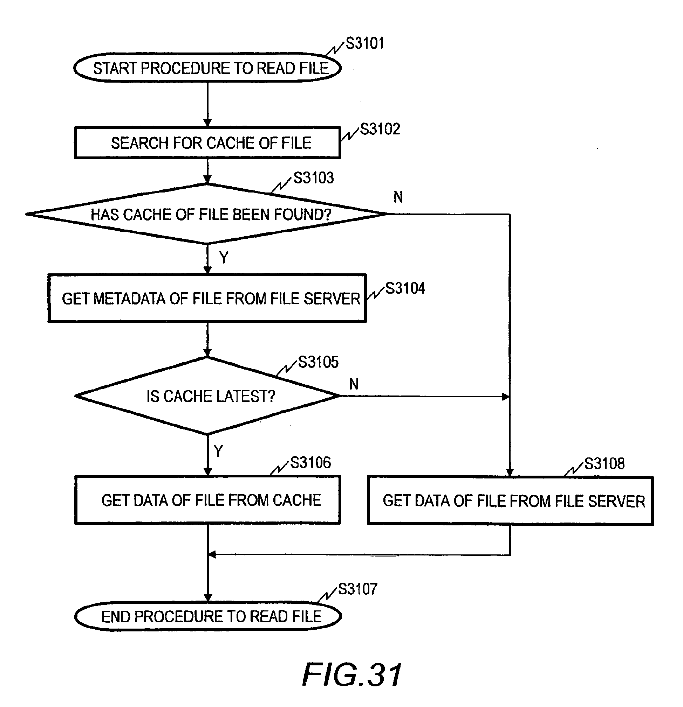

FIG. 31 is a flow chart illustrating a procedure to read a file that is executed by a conventional cache server.

The cache server receives from a terminal a request to read a file, which contains a file name, and starts a procedure to read the file (S3101).

First, the cache server searches for a file cache that is associated with the file name received from the terminal (S3102), and determines whether or not this file cache exists (S3103).

In the case where the cache server is the cache server A 3011, the cache server determines that there is the file cache 3015 that is associated with the file name received from the terminal A 3012-1. In the case of the cache server B 3021, the cache server determines that there is no file cache 3015 that is associated with the file name received from the terminal B 3012-2.

The cache server gets from the file server a file that is associated with the file name received from the terminal, in the case of determining that there is a file cache that is associated with the file name received from the terminal (S3014).

The cache server then determines whether or not the file cache stored on the cache server is latest (S3105).

Specifically, the cache server gets a fingerprint of the file that is associated with the file name received from the terminal, and refers to the obtained fingerprint to determine whether or not the file cache stored on the cache server is latest.

In the case of determining with precision whether the file cache is latest or not, the cache server is necessary to get the file from the file server. But in this case, the fingerprint of the file is used to determine whether the file cache is latest or not, because of a processing speed up.

A fingerprint of a file means a short piece of data that indicates the characteristics of the contents of the file. The nature of a fingerprint of a file is such that the fingerprint is changed greatly by even the slightest change to the contents of the file. A fingerprint of a file can therefore be used to determine whether or not a cache is latest, and is smaller in data amount than the file itself. So the time of getting a fingerprint of a file is shortly. A known method to calculate a fingerprint is MD5 (see, for example, RFC 1321, "The MD5 Message-Digest Algorithm" ). In the case where MD5 is employed, the amount of data obtained in S3104 is 128 bits.

The cache server gets file data from the file cache (S3106), in the case of determining that the file cache stored on the cache server is latest, sends the obtained file data to the user, and ends the procedure (S3107).

In the case where it is determined in S3103 that there is no file cache that is associated with the file name received from the terminal, or it is determined in S3105 that the file cache stored on the cache server is not latest, the cache server gets file data from the file server (S3108), sends the obtained file data to the user, and ends the procedure (S3107).

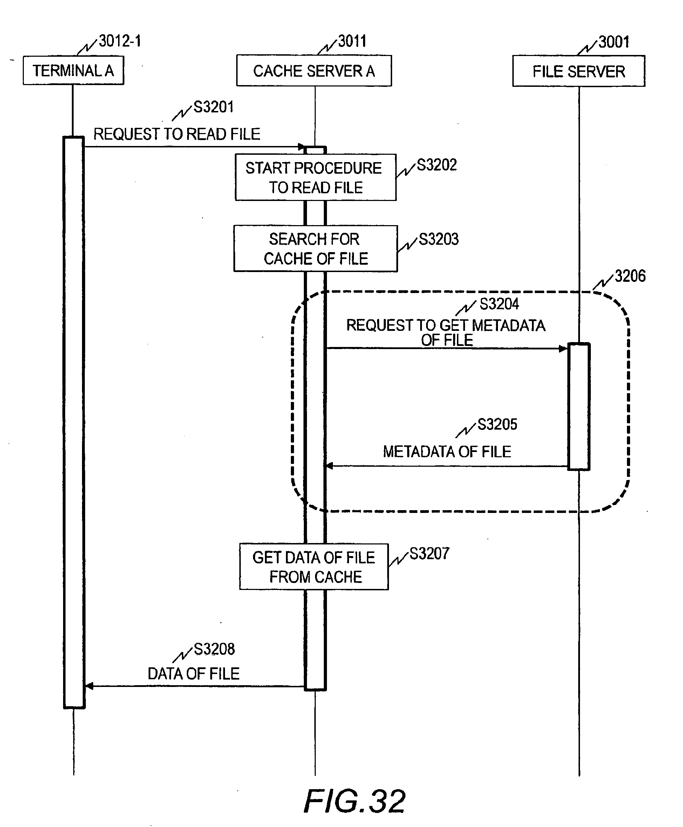

FIG. 32 is a sequence diagram illustrating a flow of the procedure to read a file that is executed by the conventional cache server.

The procedure illustrated in FIG. 32 is for a case where the terminal A 3012-1 accesses the file server 3001 via the cache server A 3011 and hits a cache as a result of the access, which means that file data is obtained from a cache.

The terminal A 3012-1 sends a request to read a file, which contains a file name, to the cache server A 3011 (S3201).

Receiving the request to read the file, which includes the file name, the cache server A 3011 starts the procedure to read the file (S3202), and searches for a file cache that is associated with the file name included in the request to read the file (S3203).

The cache server A 3011 here is storing a file cache that is associated with the file name included in the request to read the file, and therefore sends a request to get metadata of the file to the file server 3001 (S3204).

The cache server A 3011 receives from the file server 3001 metadata of the file that is associated with the file name included in the request to read the file (S3205).

Storing the file cache that is latest, the cache server A 3011 gets file data from this file cache (S3207), sends the obtained file data to the terminal A 3012-1 (S3208), and ends the procedure.

The terminal A 3012-1 and the terminal B 3012-2 in the computer system of FIG. 30 can access all files stored on the file server 3001. This necessitates consistency control through communications from the cache server A 3011 to the file server 3001 that accompany Steps S3204 and S3205 encircled by a framing line 3206.

However, in the procedure of FIG. 32 where the stored file cache is up-to-date, Steps S3204 and S3205 encircled by the framing line 3206 cause a delay in the procedure.

Further, in the computer system of FIG. 30 where the cache server A 3011 and the file server 3001 are coupled via the WAN 3030, the delay is as long as, for example, several hundred milliseconds to a second. Getting a fingerprint over the WAN 3030 therefore involves a delay of, for example, several hundred milliseconds despite the smallness in amount of the data to be obtained.

In conclusion, because processing within the cache server A 3011 (for example, S3202 and S3207) is high speed processing which takes only several milliseconds to several ten milliseconds, a consistency control method that does not include the steps encircled by the framing line 3206 is desirable.

Like the fingerprint obtained in S3105, a file contains information other than the contents of the file. Information other than the contents of a file may include, for example, the creator of the file, the created time of the file, the last modified time of the file, and information about who has permission to access the file. In the following description, information other than the contents of a file is collectively called metadata, whereas the contents of a file are called data.

In the following description, a directory is regarded as a type of file. Files therefore include directories in addition to narrowly defined files, unless otherwise stated.

### [Wire FS]

An example of consistency control that takes into account the delay in prior art as described above is a method in which the frequency of access to a subtree in a file server is compared among cache servers in order to choose a cache server appropriate to manage the administration right of metadata of the subtree and to manage data of the subtree, with the result that consistency control requires a reduced number of communication sessions over a WAN, and that the file access speed is enhanced (see, for example, US 2007/0162462 A1).

US 2002/095403 A1 provides another example of such a conventional method.

In a method described in US 2007/0162462 A1, for each one of files, including directories, contained in a file server, there are a cache server that plays the role of a "home" and a cache server that plays the role of an "owner" with respect to the file.

A cache server that frequently accesses a file serves as the "home" of this file and manages metadata of the file. A cache server that accesses the file is given a limited-time "owner" right from the "home" cache server each time the cache server attempts to access the file, and thus becomes an "owner" who has a temporary administration right of metadata of the file and a cache of data of the file.

Because a cache server that frequently accesses a file serves as the "home" of the file, the "home" and an "owner" are usually the same cache server. When the current "home" server is no longer a cache server that frequently accesses the file, the "home" right moves to a cache server that now frequently accesses the file. The statistic of unequalness in access frequency among cache servers is calculated by a management server, which is located in the central business location and also determines whether to move the "home" right.

With the method of US 2007/0162462 A1, a cache server that is an "owner" of a file statistically accessed frequently by a specific cache server can decide that its own cache is latest all the time without communicating over a WAN in executing consistency control, until the "owner" right expires. In short, an "owner" cache server does not need to execute the steps encircled by the framing line 3206 of FIG. 32.

The method of US 2007/0162462 A1, however, has a problem with a file that is statistically accessed from many business locations equally frequently.

Specifically, in the method of US 2007/0162462 A1, setting a long enough period to get information for calculating the statistic, or detecting unequal access frequency only when the difference in access frequency between cache servers is large enough, means that unequal access frequency cannot be detected for a file that is accessed by many cache servers equally frequently, and which cache server is to be the "home" of the file cannot be identified.

In other words, the number of steps executed over a WAN in executing consistency control is not reduced for a file that is statistically accessed from many business locations equally frequently.

This problem could be solved by setting a short period to get information for calculating the statistic, or detecting unequal access frequency when there is even a slight difference in access frequency between cache servers, and then assigning a specific cache server as the "home." This solution, however, is susceptible to the influence of access that can be regarded as noise and requires frequent moving of the "home" right in cases where, for example, access from one cache server to a file increases temporarily.

In the method of US 2007/0162462 A1, the "home" right of a file being accessed by one of the terminals cannot be moved for a reason described below. A file that has a specific cache server as its "home" is a frequently accessed file, and the chance is high that the file is being accessed by one of the terminals. The ramifications of not being able to move the "home" right of a file that is being accessed are therefore significant. In other words, the number of steps necessary to execute over a WAN for consistency control cannot be reduced for a file that is statistically accessed from many business locations equally frequently.

According to US 2007/0162462 A1, to move the "home" right of a file, all caches of the file (i.e., the cache held in the "home" and the cache held in each "owner") are invalidated and a notification of "home" right moving is sent from the "home" to the management server in the central business location. Metadata and "home" right of the file are then sent to a new "home."

In short, it is not until the "owner" right expires that all caches of a file can be invalidated. However, a cache server that is an "owner" of a file renews its "owner" right while one of the terminals is accessing the file, and the "owner" right does not expire as long as the file is being accessed. Accordingly, the "home" right of a file cannot be moved while the file is being accessed by one of the terminals.

Further, for the same reason as above, a cache server scheduled to shut down for maintenance or replacement cannot be shut down in the method of US 2007/0162462 A1 while a file to which the cache server is the "home" is being accessed by one of the terminals.

As described above, the conventional method has a problem in that, in cases where a central business location and other business locations access each other via a WAN, the use of a cache does not solve a delay in communication for consistency control for a file that is statistically accessed from many business locations equally frequently.

While the description here takes file access as an example of data access, there is essentially no difference and the same problem occurs when the data object accessed is other than a file.

A still further conventional method using Wire FS is described by Jian Liang et al. in "Minimizing Metadata Access Latency in Wide Area Networked File Systems", High Performance Computing - HIPC 2006 Lecture Notes in Computer Science, LNS Springer, pp. 301-312.

### SUMMARY OF THE INVENTION

A problem to be solved by this invention is that, when a conventional method is used to manage metadata of a file on a cache server, the metadata of the file cannot be moved from the cache server to another cache server while the file is being accessed by one of terminals. An object of this invention is to provide a computer system and a method of data cache management that solves this problem.

The object is met by the subject-matter defined in the independent claims.

The present invention can be appreciated by the description which follows in conjunction with the following figures, wherein: A computer system including: a file server which stores a plurality of files, cache servers each of which stores cache data of the plurality of files, and a cache management server which manages the cache servers. The file server comprises a first processor and a first memory coupled to the first processor; each cache server comprises a second processor and a second memory coupled to the second processor; and the cache management server comprises a third processor and a third memory coupled to the third processor. The cache data of one of the plurality of files includes at least one of data that can be used to identify the one of the plurality of files and data that constitutes the one of the plurality of files. The cache management server manages authority information indicating which of the cache servers has an administration right over the cache data of each of the plurality of files stored in the file server. The cache servers include a first cache server, a second cache server, and a third cache server. The first cache server comprises first lock management information for managing a lock state that indicates one of accessibility and inaccessibility of a file with the administration right thereof held by the first cache server, the second cache server comprises second lock management information for managing a lock state that indicates one of accessibility and inaccessibility of a file with the administration right thereof held by the second cache server, and the third cache server comprises third lock management information for managing a lock state that indicates one of accessibility and inaccessibility of a file with the administration right thereof held by the third cache server. The plurality of files includes a first file. A computer system wherein the first cache server obtains the authority information from the cache management server, in a case of receiving a command to process the first file from a client terminal coupled to the first cache server, wherein the first cache server refers to the obtained authority information to determine whether or not the first cache server has the administration right of cache data of the first file, wherein the first cache server executes the command to process the first file, in a case where it is determined that the first cache server has the administration right of the cache data of the first file, wherein the first cache server sends the command to process the first file to the second cache server, which has the administration right of the first file, and receives from the second cache server a result of executing the command to process the first file, in a case where it is determined that the first cache server does not have the administration right of the cache data of the first file, wherein the cache management server sends to the first cache server an update command for transferring the administration right of the cache data of the first file, which has been held by the first cache server, to the third cache server, wherein the first cache server sends the update command to the third cache server after receiving the update command, and executes a first update procedure in which the first lock management information is updated so that information on a lock state of the first file migrates to the third cache server, wherein the third cache server executes a second update procedure in which the third lock management information is updated so that the information on the lock state of the first file migrates to the third cache server after receiving the update command, and, wherein the cache management server updates the authority information so that the administration right of the cache data of the first file is changed from the first cache server to the third cache server.

According to this invention, a file that is accessed by a plurality of cache servers unequally frequently is managed by an appropriate cache server selected for each time period as one that holds the administration right of the file. A delay in communication necessary for consistency control is thus solved.

Another effect of this invention is that a transfer of administration right can be timed arbitrarily, which facilitates the running of a system such as scheduled shutdown.

### BRIEF DESCRIPTION OF THE DRAWINGS

The present invention can be appreciated by the description which follows in conjunction with the following figures, wherein:
FIG. 1 is a block diagram illustrating a computer system according to the embodiment of this invention;
FIG. 2 is a block diagram illustrating a configuration example of a file server according to the embodiment of this invention;
FIG. 3 is a block diagram illustrating a configuration example of a cache management server according to the embodiment of this invention;
FIG. 4 is a block diagram illustrating a configuration example of a cache server according to the embodiment of this invention;
FIG. 5 is an explanatory diagram of an example of a lock management table according to the embodiment of this invention;
FIG. 6 is an explanatory diagram of an example of an access suspension management table according to the embodiment of this invention;
FIG. 7 is an explanatory diagram of an example of a master cache server control table according to the embodiment of this invention;
FIG. 8 is a flow chart illustrating a procedure that is executed by the file server after booting according to the embodiment of this invention;
FIG. 9 is a flow chart illustrating a procedure that is executed by a file metadata reference function of a file server control module according to the embodiment of this invention;
FIG. 10 is a flow chart illustrating a procedure that is executed by a file lock acquiring function of the file server control module according to the embodiment of this invention;
FIG. 11 is a flow chart illustrating a procedure that is executed by a file opening function of the file server control module according to the embodiment of this invention;
FIG. 12 is a flow chart illustrating a procedure that is executed by a file updating function of the file server control module according to the embodiment of this invention
FIG. 13 is a flow chart illustrating a procedure that is executed by a file closing function of the file server control module according to the embodiment of this invention;
FIG. 14 is a flow chart illustrating a procedure that is executed by a file lock releasing function of the file server control module according to the embodiment of this invention;
FIG. 15 is a flow chart illustrating a procedure that is executed by the cache server after booting according to the embodiment of this invention;
FIG. 16 is a flow chart illustrating a procedure that is executed by a file metadata reference function of a cache server control module according to the embodiment of this invention;
FIG. 17 is a flow chart illustrating a procedure that is executed by a file lock acquiring function of the cache server control module according to the embodiment of this invention;
FIGS. 18A and 18B are flow charts illustrating a procedure that is executed by a file opening function of the cache server control module according to the embodiment of this invention;
FIGS. 19A and 19B are flow charts illustrating a procedure that is executed by a file data updating function of the cache server control module according to the embodiment of this invention;
FIG. 20 is a flow chart illustrating a procedure that is executed by a file closing function of the cache server control module according to the embodiment of this invention;
FIG. 21 is a flow chart illustrating a procedure that is executed by a file lock releasing function of the cache server control module according to the embodiment of this invention;
FIG. 22 is a flow chart illustrating a procedure that is executed by the cache management server after booting according to the embodiment of this invention;
FIG. 23 is a sequence diagram outlining a procedure that is executed by a master cache server switching UI function of a master cache server control table control UI and by a master cache server switching function of each cache server control module according to the embodiment of this invention;
FIG. 24 is a flow chart illustrating details of the procedure that is executed by the master cache server control table control UI during a master cache server updating procedure according to the embodiment of this invention;
FIG. 25 is a flow chart illustrating details of the procedure that is executed by an old cache server control module of an old cache server during the master cache server updating procedure according to the embodiment of this invention;
FIG. 26 is a flow chart illustrating details of the procedure that is executed by a new cache server control module of a new cache server during the master cache server updating procedure according to the embodiment of this invention;
FIG. 27 is a flow chart illustrating a procedure that is executed by an unequal access frequency compiling UI function of the master cache server control table control UI of the cache management server according to the embodiment of this invention;
FIG. 28 is a flow chart illustrating a procedure that is executed by the cache servers according to the embodiment of this invention when an access log transmitting command is received;
FIG. 29 is a diagram illustrating a timetable which is provided in a control terminal according to the embodiment of this invention;
FIG. 30 is a block diagram illustrating a configuration example of a computer system that includes a conventional file server;
FIG. 31 is a flow chart illustrating a procedure to read a file that is executed by a conventional cache server; and
FIG. 32 is a sequence diagram illustrating a flow of the procedure to read a file that is executed by the conventional cache server.

### DETAILED DESCRIPTION OF THE PREFERRED EMBODIMENTS

An embodiment of this invention is an example of employing cache servers in an environment where terminals located in a plurality of business locations access a file server located in a central business location over a Wide Area Network (WAN) which has a large delay.

In this embodiment, a cache server is defined as a master cache server of a file, that has the administration right of data and metadata of the file included in a directory belonging to an arbitrary subtree in the file server, and that has a lock management table. The administration right is defined here as the "right to decide that information stored in a cache that is storing metadata or data of a file is up-to-date."

A master cache server can be defined in association with a subtree when unequal access frequency is detected from results of access statistic calculation, which is calculated for each subtree, or when a user gives an instruction to that effect. Master cache server definitions are managed with the use of a master cache server control table. A user interface is provided to enable a user to define a master cache server for each subtree.

A lock management table is held in a cache server and stores lock information on files for which locks have been acquired out of files of all subtrees that the cache server manages as their master cache server.

When the master cache server of an arbitrary subtree is switched, the current master cache server sends entries of its lock management table that are about files belonging to this subtree, along with the right as a master cache server, to the new master cache server of the subtree.

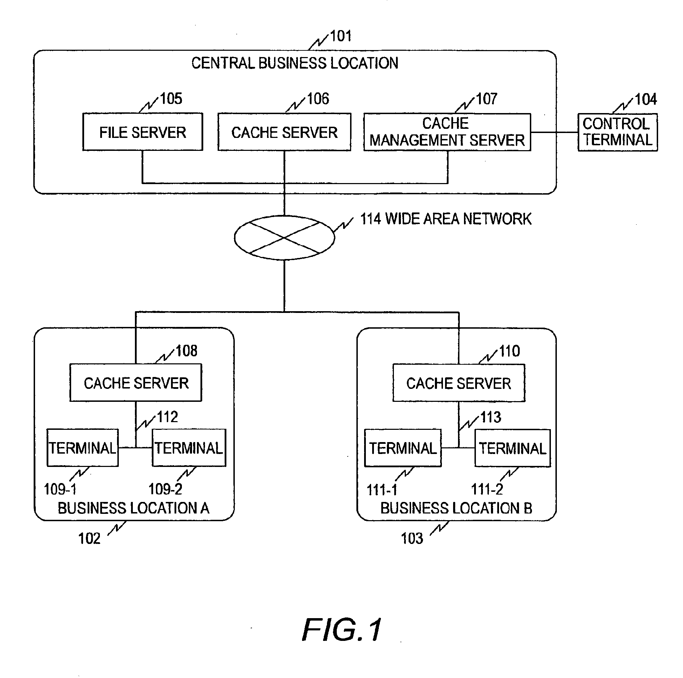

FIG. 1 is a block diagram illustrating a computer system according to the embodiment of this invention.

The computer system includes a central business location 101, a business location A 102, and a business location B 103. The central business location 101, the business location A 102, and the business location B 103 are coupled to one another via a Wide Area Network (WAN) 114.

The central business location 101 includes a file server 105, a cache server 106, and a cache management server 107.

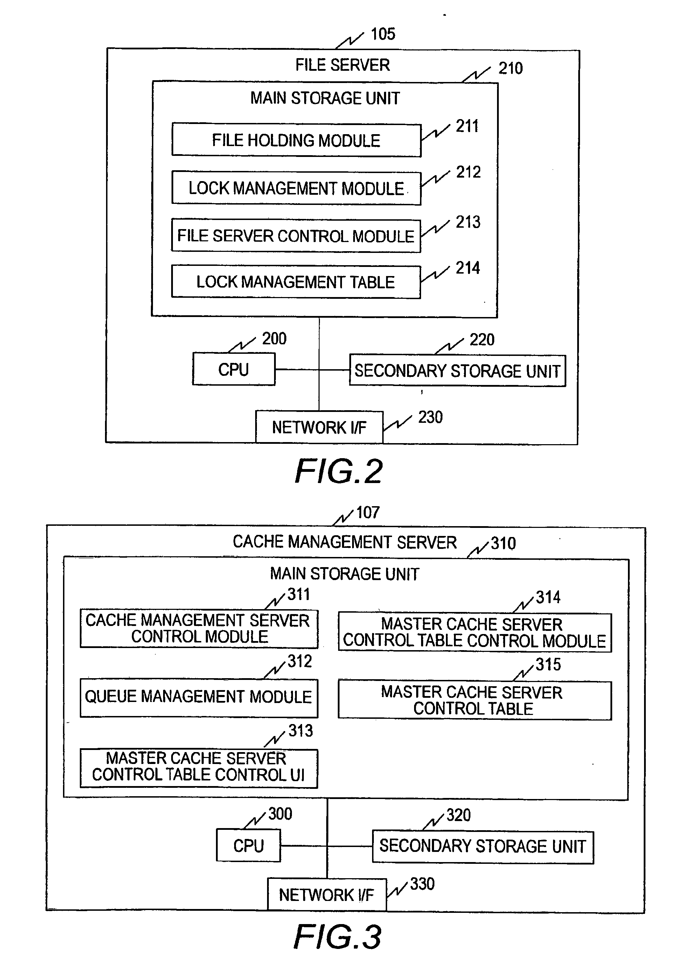

The file server 105 stores various files and executes procedures to read and update the files. In this embodiment, each file is uniquely identified by its absolute path. The configuration of the file server 105 is described later with reference to FIG. 2.

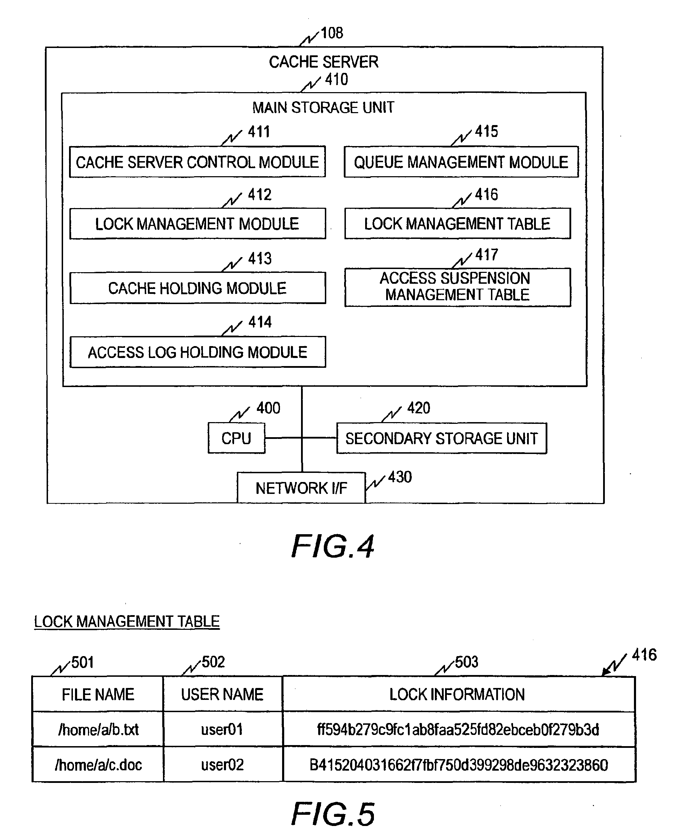

The cache server 106 stores a cache of a file stored on the file server 105. The configuration of the cache server 106 is described later with reference to FIG. 4.

The cache management server 107 manages a cache stored on each cache server. A control terminal 104 is coupled to the cache management server 107 and used by an administrator to operate the cache management server 107. The configuration of the cache management server 107 is described later with reference to FIG. 3.

The business location A 102 includes a cache server 108 and terminals 109-1 and 109-2. The cache server 108 and the terminals 109-1 and 109-2 are coupled to one another via a local network 112.

The cache server 108 is the same as the cache server 106.

The terminals 109-1 and 109-2 send a request to read or to update a file in the file server 105. The terminals 109-1 and 109-2 each comprise a central processing unit (CPU) (not shown), a main storage unit (not shown), and a secondary storage unit (not shown). The main storage unit (not shown) stores at least a file accessing program.

The business location B 103 has the same configuration as that of the business location A 102. Specifically, the business location B 103 includes a cache server 110 and terminals 111-1 and 111-2. The cache server 110 and the terminals 111-1 and 111-2 are coupled to one another via a local network 113.

The business location A 102 and the business location B 103 in the example of FIG. 1 have the same configuration but can have different configurations instead.

FIG. 2 is a block diagram illustrating a configuration example of the file server 105 according to the embodiment of this invention.

The file server 105 comprises a CPU 200, a main storage unit 210, a secondary storage unit 220, and a network interface 230. The CPU 200, the main storage unit 210, the secondary storage unit 220, and the network interface 230 are coupled to one another by an internal bus or the like.

The CPU 200 reads various programs stored in the main memory 210 and executes the read programs.

The main storage unit 210 stores programs executed by the CPU 200 and information necessary to execute the programs. The main storage unit 210 is a DRAM (Dynamic Random Access Memory) module or the like.

The main storage unit 210 stores a file holding module 211, a lock management module 212, a file server control module 213, and a lock management table 214.

The file holding module 211 manages data and metadata of a file. The file holding module 211 has a file data getting function, a file metadata getting function, a file data updating function, and a file metadata updating function.

The file data getting function is for getting data of a file with the absolute path of the file as an argument. The file metadata getting function is for getting metadata of a file with the absolute path of the file as an argument.

The file data updating function is for updating data of a file with the absolute path of the file and the data of the file as arguments. The file metadata updating function is for updating metadata of a file with the absolute path of the file and the metadata of the file as arguments.

The lock management module 212 manages the lock state of a file. This embodiment deals with an exclusive lock in order to simplify the description. The lock management module 212 in this embodiment manages the lock state for each file by its absolute path.

The lock management module 212 has a lock acquiring function and a lock releasing function. The lock acquiring function is a function of acquiring a lock on a file with the absolute path of the file as an argument, namely, a function of prohibiting other users than one who has acquired the lock from manipulating the file. The lock releasing function is a function of releasing a lock on a file with the absolute path of the file as an argument.

The file server control module 213 handles the overall control of the file server 105. Specifically, the file server control module 213 has a file metadata reference function, a file lock acquiring function, a file opening function, a file updating function, a file closing function, and a file lock releasing function.

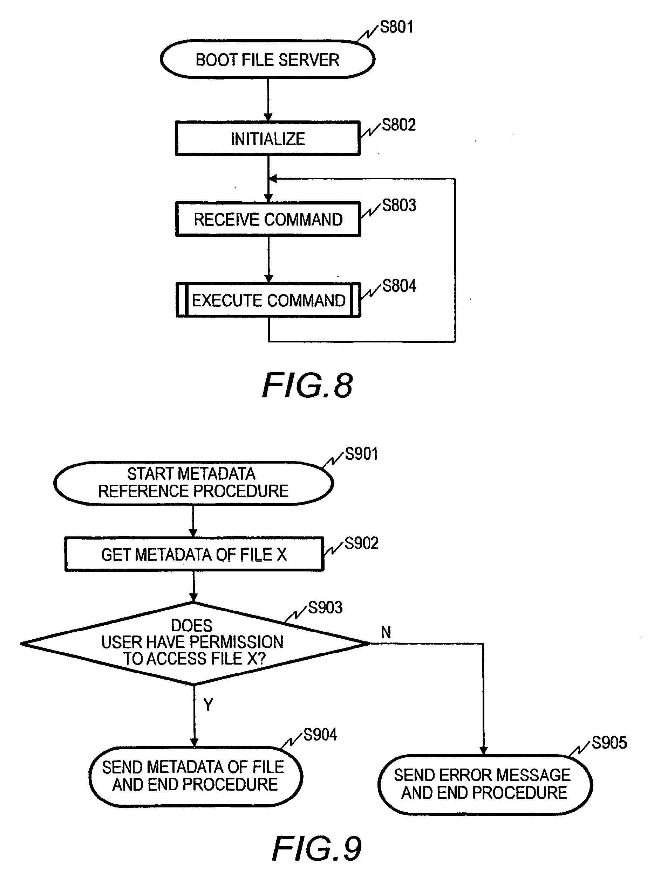

Procedures implemented by these functions are described later with reference to FIGS. 9 to 14.

The lock management table 214 stores the lock state of a file stored on the file server 105. Specifically, the lock management table 214 stores information on a file for which a lock has been acquired out of files stored on the file server 105.

The secondary storage unit 220 stores programs read onto the main storage unit 210 and various types of data. The secondary storage unit 220 is, for example, a hard disk drive (HDD).

The network interface 230 is an interface for communicating with other machines and, in this embodiment, is coupled to the WAN 114.

The file holding module 211, the lock management module 212, and the file server control module 213 which are stored in the main storage unit 210 may be implemented by hardware.

FIG. 3 is a block diagram illustrating a configuration example of the cache management server 107 according to the embodiment of this invention.

The cache management server 107 comprises a CPU 300, a main storage unit 310, a secondary storage unit 320, and a network interface 330. The CPU 300, the main storage unit 310, the secondary storage unit 320, and the network interface 330 are coupled to one another by an internal bus or the like.

The CPU 300 reads various programs stored in the main storage unit 310 and executes the read programs.

The main storage unit 310 stores programs executed by the CPU 300 and information necessary to execute the programs. The main storage unit 310 is a DRAM module or the like.

The main storage unit 310 stores a cache management server control module 311, a queue management module 312, a master cache server control table control user interface (UI) 313, a master cache server control table control module 314, and a master cache server control table 315.

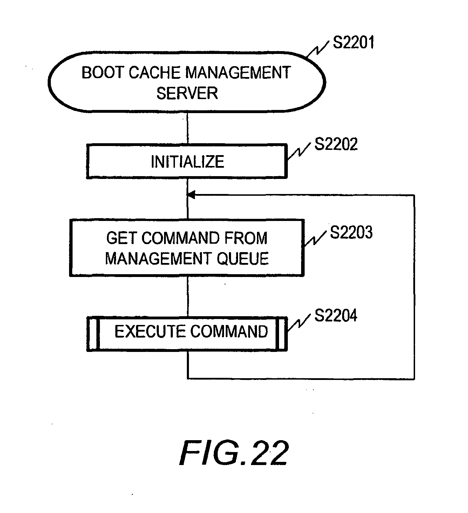

The cache management server control module 311 handles the overall control of the cache management server 107. The cache management server control module 311 has a master cache server switching function and an unequal access frequency compiling function. Procedures implemented by these functions are described later with reference to FIGS. 22 to 28.

The queue management module 312 manages queues used for communication with the master cache server control table control UI 313 or with other cache servers 108 and 110.

The queue management module 312 is used by other components to create a new queue as the need arises. Each queue is identified by a port number in this embodiment. In an alternative mounting method, a message containing the identifier of a queue in its header as the destination may be sent to the queue management module 312, which uses the received identifier to allocate an appropriate queue.

The master cache server control table control UI 313 is a user interface for manipulating the master cache server control table 315. The master cache server control table control UI 313 has a master cache server switching UI function and an unequal access frequency compiling UI function.

The master cache server switching UI function is a function of providing a UI for switching the cache server to act as the master cache server of an arbitrary subdirectory. The unequal access frequency compiling UI function is a function of providing a UI for compiling the access count on a cache server basis for every subdirectory that belongs to a file system tree provided by the file server 105.

A master cache server means the cache server 106, 108, or 110 which holds the administration right of a cache (data and metadata of a file) stored on the cache server 106, 108, or 110. A master cache server is set for each subdirectory. In other words, the cache server 106, 108, or 110 that is the master cache server of a subdirectory is given the right to administer the latest data and metadata of a file included in the subdirectory.

The master cache server control table control module 314 manages the master cache server control table 315. The master cache server control table control module 314 performs procedures on the master cache server control table 315 in accordance with a request from other components or the cache servers 106, 108, and 110. Specifically, the master cache server control table control module 314 has a master cache server control table transmitting function. The master cache server control table transmitting function is a function of transmitting the master cache server control table 315.

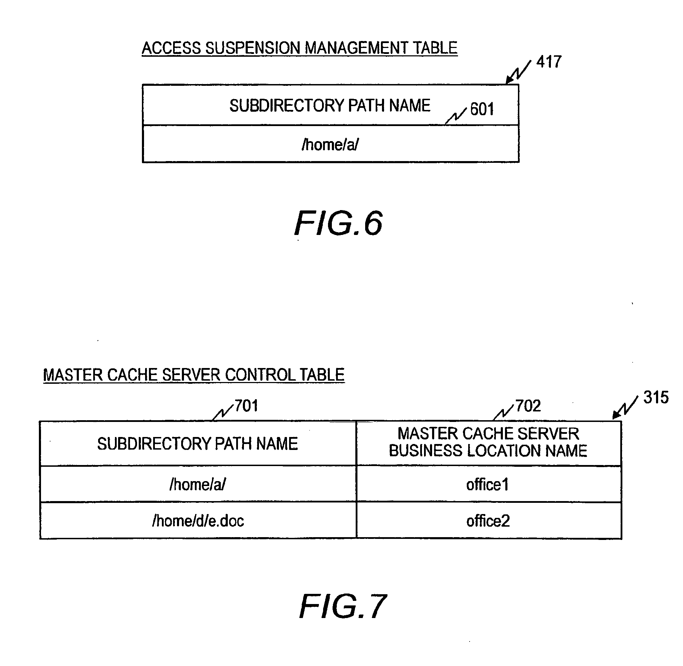

The master cache server control table 315 stores an association relation between a business location containing the cache server 106, 108, or 110 that is the master cache server of a subdirectory and the subdirectory to which the cache server 106, 108, or 110 has the administration right as its master cache server. The master cache server control table 315 is described later with reference to FIG. 7.

The master cache server control table 315 may be stored in the secondary storage unit 320 to be read onto the main storage unit 310 as the need arises. The master cache server control table 315 may also evacuate from the main storage unit 310 to the secondary storage unit 320 when the amount of data in the master cache server control table 315 increases.

The secondary storage unit 320 stores programs read onto the main storage unit 310 and various types of data. The secondary storage unit 320 is, for example, an HDD.

The network interface 330 is an interface for communicating with other machines and, in this embodiment, is coupled to the WAN 114.

The cache management server control module 311, the queue management module 312, the master cache server control table control UI 313, and the master cache server control table control module 314 which are stored in the main storage unit 310 may be implemented by hardware.

FIG. 4 is a block diagram illustrating a configuration example of the cache server 108 according to the embodiment of this invention.

The cache server 108 includes a CPU 400, a main storage unit 410, a secondary storage unit 420, and a network interface 430. The CPU 400, the main storage unit 410, the secondary storage unit 420, and the network interface 430 are coupled to one another by an internal bus or the like.

The CPU 400 reads various programs stored in the main storage unit 410 and executes the read programs.

The main storage unit 410 stores programs executed by the CPU 400 and information necessary to execute the programs. The main storage unit 410 is a DRAM module or the like.

The main storage unit 410 stores a cache server control module 411, a lock management module 412, a cache holding module 413, an access log holding module 414, a queue management module 415, a lock management table 416, and an access suspension management table 417.

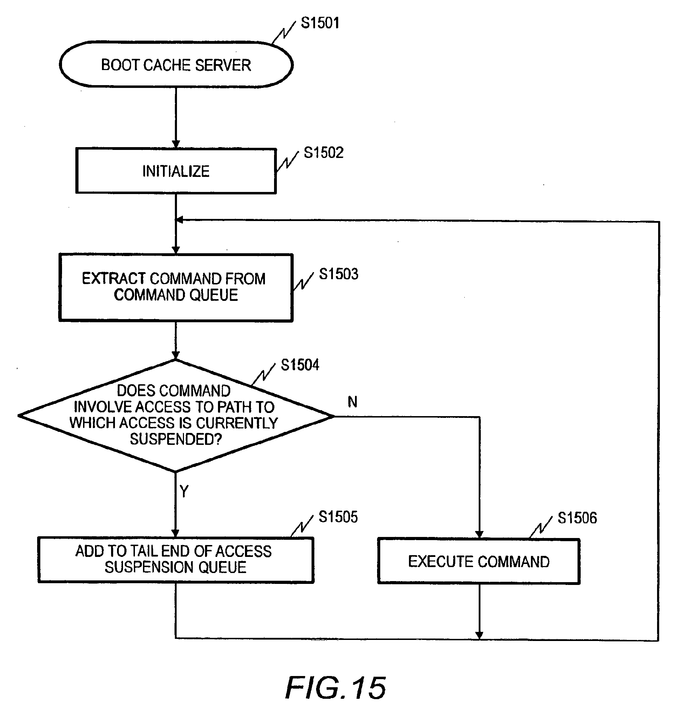

The cache server control module 411 handles the overall control of the cache server 108. The cache server control module 411 has a file metadata reference function, a file lock acquiring function, a file opening function, a file data updating function, a file closing function, and a file lock releasing function. Details of procedures implemented by these functions are described later with reference to FIGS. 15 to 21.

The cache server control module 411 also has a master cache server switching function for executing a procedure to switch a master cache server.

The lock management module 412 has the same functions as those of the lock management module 212 of the file server 105. The cache holding module 413 stores data and metadata of a file. The access log holding module 414 stores an access log of a file.

The queue management module 415 has the same function as that of the queue management module 312 of the cache management server 107, and further has a function of writing a lock state to the lock management table 416 and a function of invalidating a lock on an arbitrary file.

The function of writing a lock state to the lock management table 416 is a function of adding information about a lock that has been acquired to the lock management table 416 and deleting from the lock management table 416 information about a lock that has been released.

The function of invalidating a lock is a function of deleting an entry about an arbitrary file from lock states that are contained in the lock management module 412, without modifying the lock management table 416.

The lock management table 416 stores information on a file for which a lock has been acquired out of files that the cache server 108 manages as their master cache server. The lock management table 416 is described later with reference to FIG. 5.

The access suspension management table 417 stores information about access to a subdirectory managed by its master cache server when the master cache server is to be switched to a new cache server. The access suspension management table 417 is described later with reference to FIG. 6.

The secondary storage unit 420 stores programs read onto the main storage unit 410 and various types of data. The secondary storage unit 420 is, for example, an HDD.

The network interface 430 is an interface for communicating with other machines and, in this embodiment, is coupled to the WAN 114.

The cache server 106 and the cache server 110 have the same configuration as that of the cache server 108, and their descriptions are therefore omitted.

FIG. 5 is an explanatory diagram of an example of the lock management table 416 according to the embodiment of this invention. The lock management table 416 contains in each of its entries a file name 501, a user name 502, and lock information 503.

The file name 501 is the name of a file for which a lock has been acquired. The user name 502 is information for identifying a user who has acquired a lock on the file associated with the file name 501. For example, the user name 502 can be the name of a user who operates a terminal.

The lock information 503 is identification information of the acquired lock. Identification information of a lock is, for example, the sequence number or the like of the lock.

The lock management table 214 in the file server 105 corresponds to what is obtained by combining the respective lock management tables 416 of the cache servers 106, 108, and 110 together.

FIG. 6 is an explanatory diagram of an example of the access suspension management table 417 according to the embodiment of this invention.

The access suspension management table 417 contains a subdirectory path name 601.

The subdirectory path name 601 is the path name of a subdirectory that the cache server 106, 108, or 110 manages as its master cache server. Stored as the subdirectory path name 601 is the path name of a subdirectory that stores a file accessed at the time the master cache server is switched.

FIG. 7 is an explanatory diagram of an example of the master cache server control table 315 according to the embodiment of this invention.

The master cache server control table 315 contains in each of its entries a subdirectory path name 701 and a master cache server business location name 702.

The subdirectory path name 701 is the path name of a subdirectory that the cache server 106, 108, or 110 manages as its master cache server. The master cache server business location name 702 is information for identifying which business location includes a cache server that manages the subdirectory indicated by the subdirectory path name 701 as its master cache server.

In the description given below, the file server 105 employs a file sharing protocol that causes the file accessing program included in each terminal to operate in the following steps.

In a first step, the terminal acquires a lock on a target file. In a second step, the terminal opens the file. In a third step, the terminal updates the file an arbitrary number of times. In a fourth step, the terminal closes the file. In a fifth step, the terminal releases the lock on the file.

In some variations of file sharing protocol, a file is locked the instant a file open command is issued and a file lock is released the instant a file close command is issued. This can be accomplished with a simple combination of the steps described above, for example, by executing the first step and the second step simultaneously and executing the fourth step and the fifth step simultaneously.

A lock acquired in the first step in this embodiment is an exclusive lock. In other words, discussed here is exclusive access permission which, once a user acquires an exclusive lock on a file, prohibits other users from acquiring an exclusive lock on the file. A user who is prohibited from acquiring an exclusive lock on a file is not able to open the file either, and, as a result, cannot read the file.

There are different types of locks such as a shared lock and an exclusive lock. Different types of locks may be used in combination. For instance, a file for which a user has acquired a shared lock further allows another user to acquire a shared lock therefor, whereas a file for which a user has acquired an exclusive lock does not allow another user to acquire a shared lock therefor.

Known technologies are used to manage locks, to hand over lock information to a user, and to manage lock combinations, and their descriptions are therefore omitted.

The invention can be carried out whatever methods are used to manage locks, to hand over lock information to a user, and to manage lock combinations.

In this embodiment, lock information on the file server 105 is managed by the lock management module 212 in a centralized manner.

A terminal executing a file accessing program of a common variety refers to metadata of a file before acquiring a lock on the file in order to get information necessary for the operation of the file accessing program, such as the file size.

The file server 105 is described next.

FIG. 8 is a flow chart illustrating a procedure that is executed by the file server 105 after booting according to the embodiment of this invention.

The file server 105, after booted, starts a procedure (S801) and initializes the lock management module 212 (S802).

The file server 105 next receives a command from the cache server 106, 108, or 110 (S803) and executes the received command (S804). In other words, a procedure for fulfilling the received command is executed. The file server 105 repeatedly executes Steps S803 and S804.

The functions of the file server control module 213 of the file server 105 are described below with reference to FIGS. 9 to 14.

FIG. 9 is a flow chart illustrating a procedure that is executed by the file metadata reference function of the file server control module 213 according to the embodiment of this invention.

The procedure of FIG. 9 is executed in the case where the command received in S803 is a command to execute a metadata reference procedure.

The command received in S803 includes the absolute path of a file whose metadata is to be referred to, the user name of a user who is attempting to refer to the metadata, and the sequence number of a lock.

In the following description, the file of which metadata is to be referred to is denoted by X and the user name of the user who is attempting to refer to the metadata is denoted by Y.

The file server control module 213 obtains the absolute path of the file X and the user Y which are included in the command received in S803, starts the metadata reference procedure (S901), and gets metadata of the file X from the file holding module 211 (S902). The metadata includes a file access permission information indicating who has the permission to access the file X.

The file server control module 213 determines whether or not the user Y has the permission to access the file X (S903). Specifically, the file server control module 213 refers to the file access permission information included in the obtained metadata, and determines whether or not the user Y has the permission to access the file X.

In the case where it is determined that the user Y has the permission to access the file X, the file server control module 213 sends the metadata of the file X to one of the cache servers 106, 108, and 110 that has issued the command received in S803, and ends the procedure (S904).

In the case where it is determined that the user Y does not have the permission to access the file X, the file server control module 213 sends an error message to the user Y and ends the procedure (S905).

In a variation where the file server 105 executes the authentication of a user's access permission, the command received in S803 may further include other necessary information for the authentication, such as an authentication key or a password. An authentication procedure with respect to the file server 105 may be executed only when a user accesses the file server 105 for the first time. In this case, because authentication using a special authentication command is executed when the user accesses the file server 105 for the first time, the command received in S803 may not include a user name. In procedures described below, which one of the variations can be employed in authenticating a user's access permission.

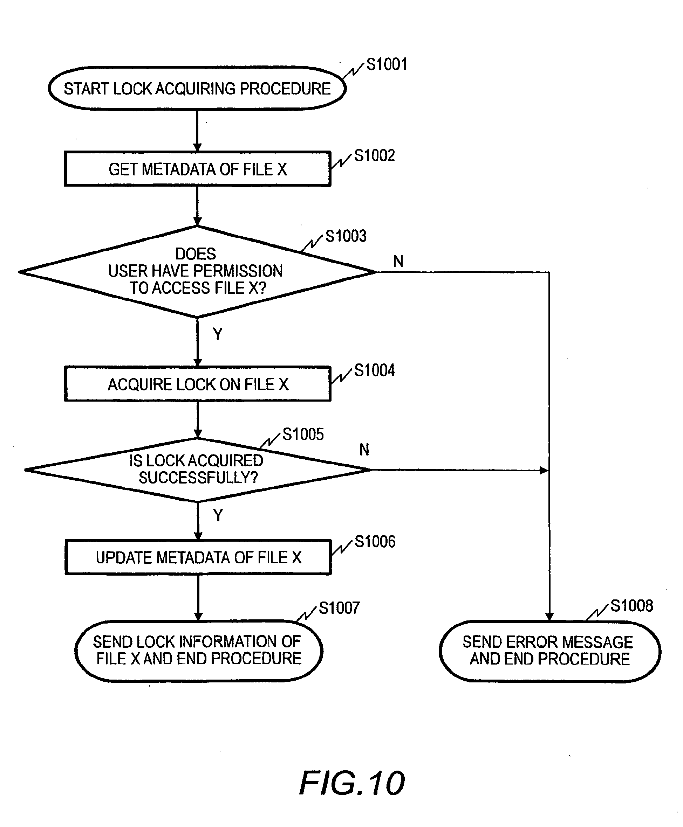

FIG. 10 is a flow chart illustrating a procedure that is executed by the file lock acquiring function of the file server control module 213 according to the embodiment of this invention.

The procedure of FIG. 10 is executed in the case where the command received in S803 is a command to execute a lock acquiring procedure.

The command received in S803 includes the absolute path of a file for which a lock is to be acquired, and the user name of a user who is attempting to acquire a lock on the file.

In the following description, the file for which a lock is to be acquired is denoted by X and the user name of the user who is attempting to acquire the lock on the file X is denoted by Y. The file server control module 213 obtains the absolute path of the file X and the user Y which are included in the command received in S803, starts the lock acquiring procedure (S1001), and gets metadata of the file X from the file holding module 211 (S1002).

The file server control module 213 determines whether or not the user Y has the permission to access the file X (S1003). This step is the same as the one in S903.

In the case where it is determined that the user Y does not have the permission to access the file X, the file server control module 213 sends an error message to the user Y and ends the procedure (S1008).

In the case where it is determined that the user Y has the permission to access the file X, the file server control module 213 acquires the lock on the file X (S1004). Specifically, the file server control module 213 instructs the lock management module 212 to acquire a lock. Receiving the instruction, the lock management module 212 uses the lock acquiring function to execute the acquisition of a lock. The lock management module 212 here refers to the lock management table 214 and, in the case where no other users have acquired the lock on the file X, adds an entry for the user Y to the lock management table 214 and decides that a lock is successfully acquired. In the case where some other user has already acquired the lock on the file X, on the other hand, the lock management module 212 does not add an entry for the user Y to the lock management table 214 and decides that the attempt to acquire a lock is a failure.

The file server control module 213 determines whether or not the lock on the file X is acquired successfully (S1005). In other words, the file server control module 213 determines whether or not another user has already acquired the lock on the file X.

Specifically, after executing Step S1004, the file server control module 213 receives a lock acquisition success/failure message from the lock management module 212.

In the case where it is determined that the lock on the file X is not acquired successfully, the file server control module 213 sends an error message to the user Y and ends the procedure (S1008).

In the case where it is determined that the lock on the file X is acquired successfully, the file server control module 213 updates the metadata of the file X which has been obtained in S1002 (S1006), sends lock information to the user Y, and ends the procedure (S1007).

The lock information transmitted here is a pair of keys used between the file server 105 and the user Y to confirm the successful acquisition of the lock on the file X. The keys can be serial numbers or random numbers.

Updating metadata of the file X in this embodiment involves updating the last access time. In the following description of this embodiment, updating metadata means updating the last access time, unless otherwise stated. As variations of the procedure to update metadata of the file X, the last access time and the last accessing user may be updated, or the last access time may be divided into the last modified time and the last reference time to have a finer granularity. This invention can employ any one of the variations.

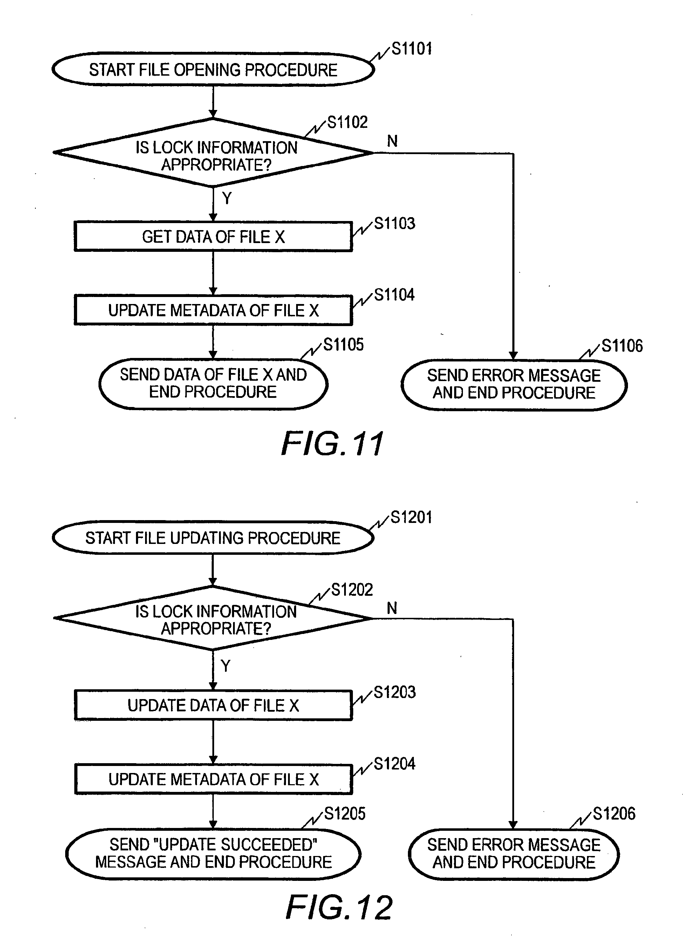

FIG. 11 is a flow chart illustrating a procedure that is executed by the file opening function of the file server control module 213 according to the embodiment of this invention.

The procedure of FIG. 11 is executed in the case where the command received in S803 is to execute a file opening procedure.

The command received in S803 includes the absolute path of a file to be opened, information identifying a user who is attempting to open the file, and lock information given to the user.

In the following description, the file to be opened is denoted by X and the user name of the user who is attempting to open the file X is denoted by Y.

The file server control module 213 obtains the absolute path of the file X, the user Y, and the lock information which are included in the command received in S803, starts the file opening procedure (S1101), and determines whether or not the obtained lock information is appropriate (S1102).

Specifically, the file server control module 213 refers to the lock management table 214 to determine whether or not the obtained lock information is the same as the lock information 503 that is associated with the file X.

In the case where it is determined that the obtained lock information is not appropriate, the file server control module 213 sends an error message to the user Y and ends the procedure (S1106).

In the case where it is determined that the obtained lock information is appropriate, the file server control module 213 gets data of the file X from the file holding module 211 (S1103), and also updates metadata of the file X (S1104).

The file server control module 213 sends the obtained data of the file X to the user Y and ends the procedure (S1105).

FIG. 12 is a flow chart illustrating a procedure that is executed by the file updating function of the file server control module 213 according to the embodiment of this invention.

The procedure of FIG. 12 is executed in the case where the command received in S803 is a command to execute a file updating procedure.

The command received in S803 includes the absolute path of a file to be updated, the user name of a user who is attempting to update the file, and lock information given to the user.

In the following description, the file to be updated is denoted by X and the user name of the user who is attempting to update the file X is denoted by Y.

The file server control module 213 obtains the absolute path of the file X, the user Y, and the lock information which are included in the command received in S803, starts the file updating procedure (S1201), and determines whether or not the obtained lock information is appropriate (S1202). This determination is the same as the one in S1102.

In the case where it is determined that the obtained lock information is not appropriate, the file server control module 213 sends an error message to the user Y and ends the procedure (S1206).

In the case where it is determined that the obtained lock information is appropriate, the file server control module 213 updates data of the file X (S1203), and also updates metadata of the file X (S1204).

The file server control module 213 sends an "update succeeded" message indicating the success of the updating procedure to the user Y, and ends the procedure (S1205).

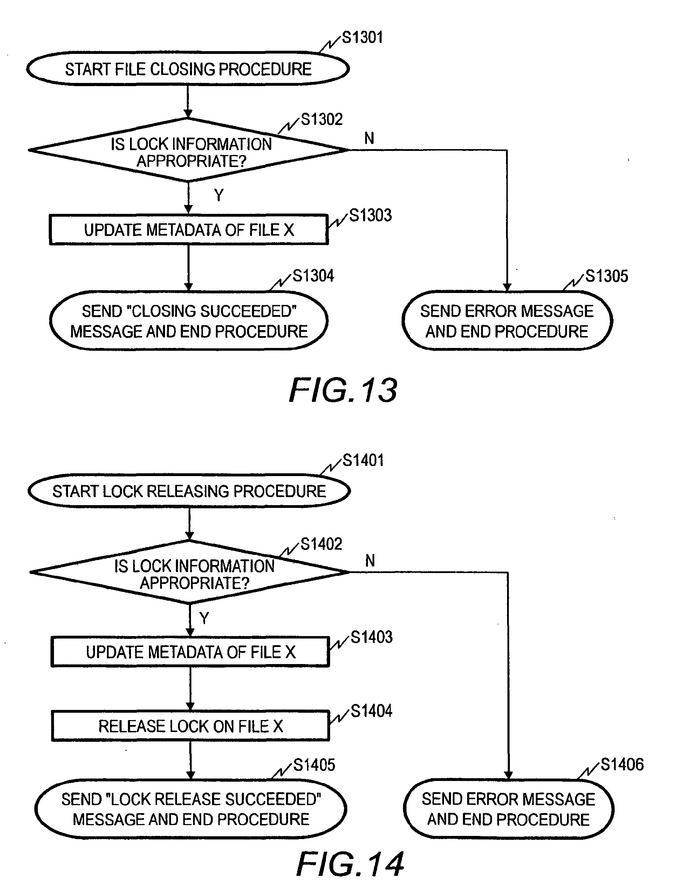

FIG. 13 is a flow chart illustrating a procedure that is executed by the file closing function of the file server control module 213 according to the embodiment of this invention.

The procedure of FIG. 13 is executed in the case where the command received in S803 is a command to execute a file closing procedure.

The command received in S803 includes the absolute path of a file to be closed, the user name of a user who is attempting to close the file, and lock information given to the user.

In the following description, the file to be closed is denoted by X and the user name of the user who is attempting to close the file X is denoted by Y.

The file server control module 213 obtains the absolute path of the file X, the user Y, and the lock information which are included in the command received in S803, starts the file closing procedure (S1301), and determines whether or not the obtained lock information is appropriate (S1302). This determination is the same as the one in S 1102.

In the case where it is determined that the obtained lock information is appropriate, the file server control module 213 updates metadata of the file X (S1303), sends a "closing succeeded" message indicating the success of the file closing procedure to the user Y, and ends the procedure (S1304).

In the case where it is determined that the obtained lock information is not appropriate, the file server control module 213 sends an error message to the user Y and ends the procedure (S1305).

FIG. 14 is a flow chart illustrating a procedure that is executed by the file lock releasing function of the file server control module 213 according to the embodiment of this invention.

The procedure of FIG. 14 is executed in the case where the command received in S803 is to execute a lock releasing procedure.

The command received in S803 includes the absolute path of a file for which a lock is to be released, the user name of the user who is attempting to release a lock on the file, and lock information given to the user.

In the following description, the file for which a lock is to be released is denoted by X and the user name of the user who is attempting to release the lock on the file X is denoted by Y.

The file server control module 213 obtains the absolute path of the file X, the user Y, and the lock information which are included in the command received in S803, starts the lock releasing procedure (S1401), and determines whether or not the obtained lock information is appropriate (S1402). This determination is the same as the one in S 1102.

In the case where it is determined that the obtained lock information is not appropriate, the file server control module 213 sends an error message to the user Y and ends the procedure (S1406).

In the case where it is determined that the obtained lock information is appropriate, the file server control module 213 updates metadata of the file X (S1403), and releases the lock on the file X (S1404).

The file server control module 213 sends a "lock release succeeded" message indicating the success of the lock releasing procedure to the user, and ends the procedure (S1405).

The cache server 108 is described next. Descriptions on the cache servers 106 and 110 which are the same as the cache server 108 are omitted.

FIG. 15 is a flow chart illustrating a procedure that is executed by the cache server 108 after booting according to the embodiment of this invention.

The cache server 108, after booted, starts this procedure (S1501) and initializes the access log holding module 414, the queue management module 415, the lock management table 416, and the access suspension management table 417 (S1502).

In the initialization step, the cache server 108 instructs the queue management module 415 to create a command queue and an access suspension queue.

The command queue is a queue for receiving a command from the terminals 109 and 111 or the other cache servers. The suspension queue is a queue for temporarily holding a command sent to a subdirectory path that is currently unavailable for access from the terminals 109 and 111 or the other cache servers.

The cache server 108 extracts a command from the command queue (S1503) and determines whether or not the extracted command involves access to a subdirectory path that is currently unavailable for access (S1504).

Specifically, the cache server 108 refers to the access suspension management table 417 to determine whether or not the path of a file, to be accessed in accordance with the extracted command, is included in a subdirectory path that is stored as the subdirectory path name 601. In the case where the path of the file is included in the subdirectory path stored as the subdirectory path name 601, the cache server 108 determines that the extracted command involves access to a subdirectory path that is currently unavailable for access.

For example, in the case where "/a/b" is stored as the subdirectory path name 601 in the access suspension management table 417 and the absolute path of a file to be accessed in accordance with the extracted command is "/a/b/c.txt," it is determined that the command involves access to a subdirectory path that is currently unavailable for access.

In the case where it is determined that the extracted command involves access to a subdirectory path that is currently unavailable for access, the cache server 108 adds the command to the tail end of the access suspension queue (S1505), and returns to S1503 to repeatedly execute S 1503 to S1506.

In the case where it is determined that the extracted command does not involve access to a subdirectory path that is currently unavailable for access, the cache server 108 creates a new thread, executes the command (S1506), and returns to S1503 to repeatedly execute S1503 to S1506. In other words, a procedure for fulfilling the extracted command is executed.

Instead of creating a new thread at the time the extracted command is executed, a thread pool may be employed in which a plurality of threads are created in advance and used in turns. This way, the cost can be reduced if it costs much to create a new thread each time an extracted command is executed.

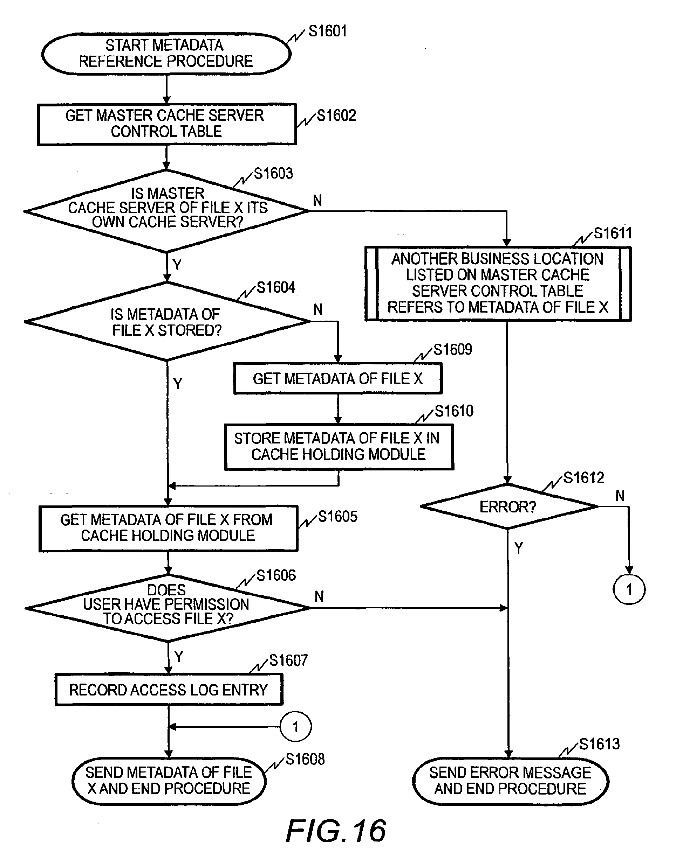

The functions of the cache server control module 411 of the cache server 108 are described next with reference to FIGS. 16 to 21.

FIG. 16 is a flow chart illustrating a procedure that is executed by the file metadata reference function of the cache server control module 411 according to the embodiment of this invention.

The procedure of FIG. 16 is executed in the case where the command extracted in S1503 is a command to execute a metadata reference procedure.

The command extracted in S 1503 includes the absolute path of a file whose metadata is to be referred to, the user name of a user who is attempting to refer to the metadata, and the business location name of a business location where the user is located.

In the following description, the file of which metadata is to be referred to is denoted by X, the user name of the user who is attempting to refer to the metadata of the file X is denoted by Y, and the business location name of the business location where the user Y is located is denoted by Z.

The cache server control module 411 obtains the absolute path of the file X, the user Y, and the business location Z which are contained in the command extracted in S1503, and starts the metadata reference procedure (S1601). The command extracted in S1503 may not contain a business location name and, in this case, the procedure is executed with the name of a business location where the cache server 108 itself is located as the user's business location name.

The cache server control module 411 gets the master cache server control table 315 from the cache management server 107 (S1602).

Specifically, the cache server control module 411 sends to the master cache server control table control module 314 of the cache management server 107 a request to transmit the master cache server control table 315, and receives the master cache server control table 315 transmitted from the master cache server control table control module 314 with the use of the master cache server control table transmitting function in response to the request.

The cache server control module 411 gets the master cache server control table 315 because, in this embodiment where a master cache server is frequently switched, which cache server is a master cache server needs to be checked at the start of the procedure.

The cache server control module 411 may manage the master cache server control table 315 by, for example, temporarily holding the received master cache server control table 315 and invalidating a cache of the master cache server control table 315 when a notification of an update to the master cache server control table 315 is received from the cache management server 107.

In this case, the cache server control module 411 may get the master cache server control table 315 from the cache management server 107 again as the need arises, or may get the master cache server control table 315 from the cache management server 107 immediately after the reception of a notification that an update has been made to the master cache server control table 315.

The cache server control module 411 refers to the obtained master cache server control table 315 to determine whether or not the master cache server of the file X is its own cache server (S1603).

Specifically, the cache server control module 411 executes the following determination procedure:
The cache server control module 411 first determines whether or not the absolute path of the file X is included in a subdirectory that is stored as the subdirectory path name 701.

In the case where it is determined that the absolute path of the file X is included in the subdirectory that is stored as the subdirectory path name 701, the cache server control module 411 refers to the master cache server control table 315 and determines whether or not the master cache server business location name 702, that is associated with this subdirectory, is the name of the business location of its own cache server.

In the case where it is determined that the master cache server of the file X is its own cache server, the cache server control module 411 determines whether or not the cache holding module 413 stores metadata of the file X (S1604).

In the case where it is determined that the cache holding module 413 does not store metadata of the file X, the cache server control module 411 gets metadata of the file X from the file server 105 (S1609), stores the obtained metadata of the file X in the cache holding module 413 (S1610), and proceeds to S1605.

In the case where it is determined that the cache holding module 413 stores metadata of the file X, the cache server control module 411 gets the metadata of the file X from the cache holding module 413 (S1605).

The cache server control module 411 determines whether or not the user Y has the permission to access the file X (S1606).

In the case where it is determined that the user Y does not have the permission to access the file X, the cache server control module 411 sends an error message to the user Y and ends the procedure (S1613).

In the case where it is determined that the user Y has the permission to access the file X, the cache server control module 411 records an access log entry indicating that the business location Z has referred to metadata of the file X (S1607). Specifically, the cache server control module 411 stores the access log entry in the access log holding module 414.

The cache server control module 411 sends the metadata of the file X to the file server 105 and ends the procedure (S1608).

In the case where it is determined in S1603 that the master cache server of the file X is not its own cache server, the cache server control module 411 refers to the master cache server control table 315 and requests one of the other cache servers that is the master cache server of the file X to execute the metadata reference procedure (S1611).

Specifically, the cache server control module 411 sends to one of the other cache servers that is the master cache server of the file X a metadata reference procedure execution request, which includes the absolute path of the file X, the user Y, and the business location Z. Receiving the execution request, one of the other cache servers that is the master cache server of the file X executes Steps S1601 to S1613 and sends the result of executing the steps to the cache server control module 411 that has made the execution request.

The cache server control module 411 determines whether or not the result sent from one of the other cache servers that is the master cache server of the file X is an error (S1612).

Determining that the result sent from one of the other cache servers that is the master cache server of the file X is not an error, the cache server control module 411 proceeds to S1608.

Determining that the result sent from one of the other cache servers that is the master cache server of the file X is an error, the cache server control module 411 proceeds to S1613.

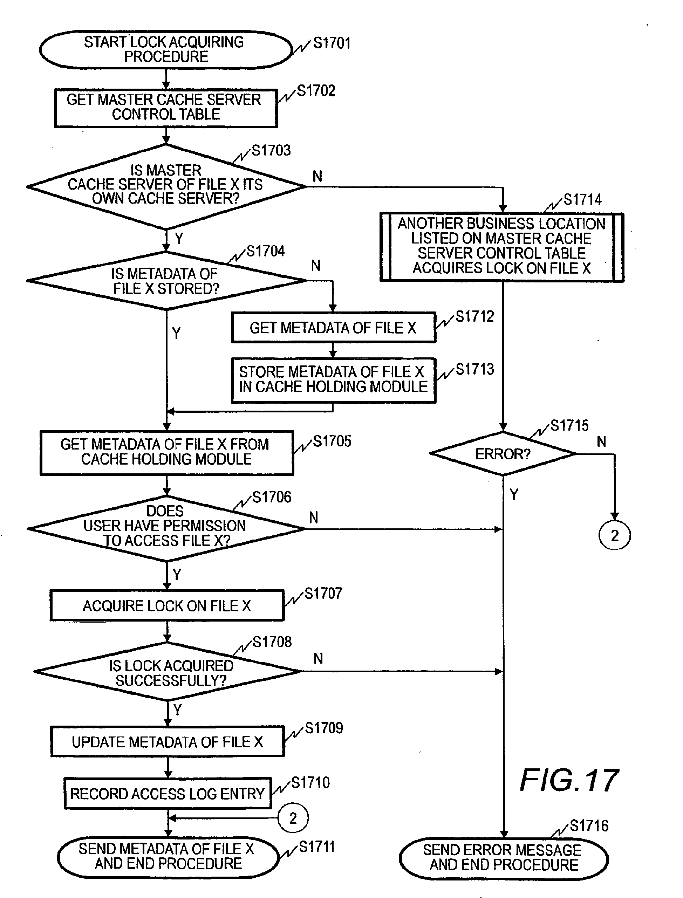

FIG. 17 is a flow chart illustrating a procedure that is executed by the file lock acquiring function of the cache server control module 411 according to the embodiment of this invention.

The procedure of FIG. 17 is executed in the case where the command extracted in S 1503 is a command to execute a lock acquiring procedure.

The command extracted in S1503 includes the absolute path of a file for which a lock is to be acquired, the user name of a user who is attempting to acquire to a lock on the file, and the business location name of a business location where the user is located.

In the following description, the file for which a lock is to be acquired is denoted by X, the user name of the user who is attempting to acquire the lock is denoted by Y, and the business location name of the business location where the user Y is located is denoted by Z.

The cache server control module 411 obtains the absolute path of the file X, the user Y, and the business location Z which are included in the command extracted in S1503, and starts the lock acquiring procedure (S1701). The command extracted in S1503 may not include a business location name and, in this case, the procedure is executed with the name of a business location where the cache server 108 itself is located as the user's business location name.

The cache server control module 411 gets the master cache server control table 315 from the cache management server 107 (S1702). This step is the same as S1602.

The cache server control module 411 refers to the obtained master cache server control table 315 to determine whether or not the master cache server of the file X is its own cache server (S1730). This step is the same as S1603.

In the case where it is determined that the master cache server of the file X is its own cache server, the cache server control module 411 determines whether or not the cache holding module 413 stores metadata of the file X (S1704). This step is the same as S1604.

In the case where it is determined that the cache holding module 413 does not store metadata of the file X, the cache server control module 411 gets metadata of the file X from the file server 105 (S1712), stores the obtained metadata of the file X in the cache holding module 413 (S1713), and proceeds to S1705. Steps S1712 and S1713 are the same as S1609 and S1610.

In the case where it is determined that the cache holding module 413 stores metadata of the file X, the cache server control module 411 gets the metadata of the file X from the cache holding module 413 (S1705), and determines whether or not the user Y has the permission to access the file X (S1706). Steps S1705 and S1706 are the same as S1605 and S 1606.

In the case where it is determined that the user Y does not have the permission to access the file X, the cache server control module 411 sends an error message to the user Y and ends the procedure (S1716). This step is the same as S1613.

In the case where it is determined that the user Y has the permission to access the file X, the cache server control module 411 acquires the lock on the file X (S1707). Specifically, the cache server control module 411 instructs the lock management module 412 to acquire a lock.

Receiving the instruction to acquire a lock, the lock management module 412 uses the lock acquiring function to acquire the lock on the file X. Specifically, the lock management module 412 refers to the lock management table 416 and, in the case where no other user has acquired the lock on the file X, adds an entry for the user Y to the lock management table 416 and decides that a lock is successfully acquired. In the case where some other user has already acquired the lock on the file X, on the other hand, the lock management module 412 does not add an entry for the user Y to the lock management table 416 and decides that the attempt to acquire a lock is a failure.

The cache server control module 411 determines whether or not a lock is acquired successfully (S 1708). In other words, the cache server control module 411 determines whether or not another user has already acquired the lock on the file X.

Specifically, after executing Step S1707, the cache server control module 411 receives a lock acquisition success/failure message from the lock management module 412.

In the case where it is determined that that a lock is not acquired successfully, the cache server control module 411 sends an error message to the user Y and ends the procedure (S 1716).

In the case where it is determined that a lock is acquired successfully, the cache server control module 411 updates the metadata of the file X (S1709). In other words, the cache server control module 411 updates the last access time.

The cache server control module 411 records an access log entry indicating that the business location Z has acquired the lock on the file X (S 1710). This step is the same as S1607.

The cache server control module 411 sends the metadata of the file X to the file server 105 and ends the procedure (S1711).

In the case where it is determined in S1703 that the master cache server of the file X is not its own cache server, the cache server control module 411 refers to the master cache server control table 315 and requests one of the other cache servers that is the master cache server of the file X to execute the lock acquiring procedure (S 1714).

Specifically, the cache server control module 411 sends to one of the other cache servers that is the master cache server of the file X a lock acquiring procedure execution request, which includes the absolute path of the file X, the user Y, and the business location Z. Receiving the execution request, one of the other cache servers that is the master cache server of the file X executes Steps S1701 to S1716 and sends the result of executing the steps to the cache server control module 411 that has made the execution request.

The cache server control module 411 determines whether or not the result sent from one of the other cache servers that is the master cache server of the file X is an error (S1715).

In the case where it is determined that the result sent from one of the other cache servers that is the master cache server of the file X is not an error, the cache server control module 411 proceeds to S 1711.

In the case where it is determined that the result sent from one of the other cache servers that is the master cache server of the file X is an error, the cache server control module 411 proceeds to S1716.

In a variation for speeding up S2401 of a master cache server updating procedure, which is described later, metadata stored in the cache server is sent to the file server 105 after a data updating procedure is executed.

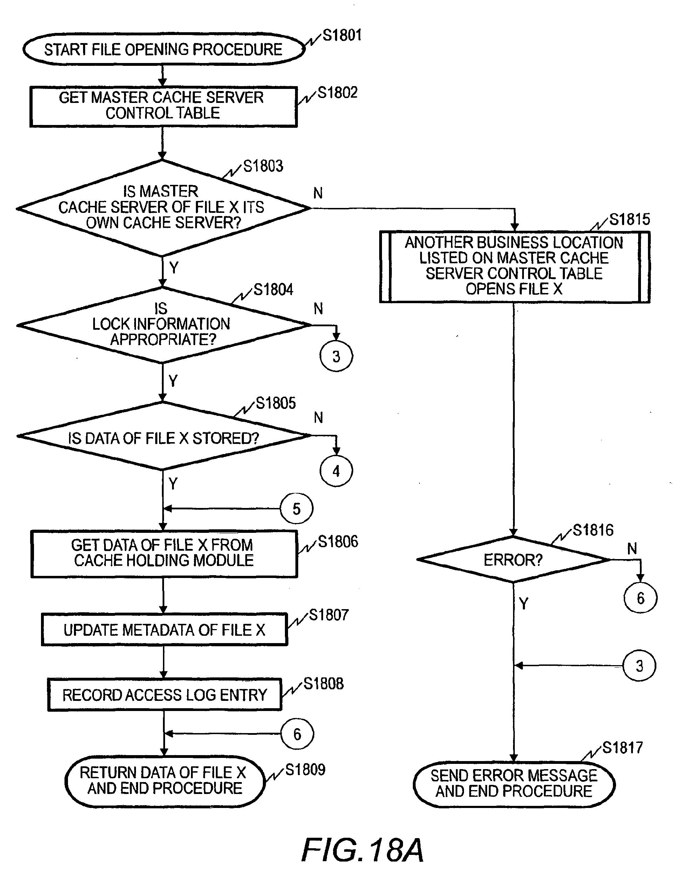

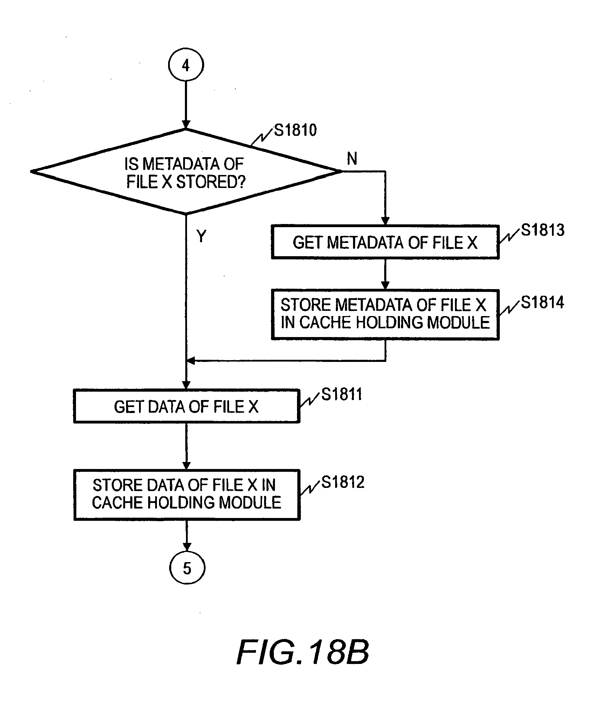

FIGS. 18A and 18B are flow charts illustrating a procedure that is executed by the file opening function of the cache server control module 411 according to the embodiment of this invention.

The procedure of FIGS. 18A and 18B is executed in the case where the command extracted in S1503 is a command to execute a file opening procedure.

The command extracted in S 1503 includes the absolute path of a file to be opened, information for identifying a user who is attempting to open the file, information about a business location where the user is located, and lock information.

In the following description, the file to be opened is denoted by X, the user name of the user who is attempting to open the file X is denoted by Y, and the business location name of the business location where the user Y is located is denoted by Z.

The cache server control module 411 obtains the absolute path of the file X, the user Y, the business location Z, and the lock information which are included in the command extracted in S1503, and starts the file opening procedure (S1801). The command extracted in S1503 may not include a business location name and, in this case, the procedure is executed with the name of a business location where the cache server 108 itself is located as the user's business location name.

The cache server control module 411 gets the master cache server control table 315 from the cache management server 107 (S1802). This step is the same as S1602.

The cache server control module 411 refers to the obtained master cache server control table 315 to determine whether or not the master cache server of the file X is its own cache server (S1803). This step is the same as S1603.

In the case where it is determined that the master cache server of the file X is its own cache server, the cache server control module 411 determines whether or not the obtained lock information is appropriate (S1804).

Specifically, the cache server control module 411 uses the obtained absolute path of the file X to refer to the lock management table 416 and determine whether or not the lock information 503 in an entry that holds the absolute path of the file X matches the obtained lock information.

In the case where it is determined that the obtained lock information is not appropriate, the cache server control module 411 sends an error message to the user Y and ends the procedure (S1817). This step is the same as S1613.

In the case where it is determined that the obtained lock information is appropriate, the cache server control module 411 determines whether or not the cache holding module 413 stores data of the file X (S1805).

In the case where it is determined that the cache holding module 413 does not store data of the file X, the cache server control module 411 determines whether or not the cache holding module 413 stores metadata of the file X (S1810). This step is the same as S1604.

In the case where it is determined that the cache holding module 413 does not store metadata of the file X, the cache server control module 411 gets metadata of the file X from the file server 105 (S1813), stores the obtained metadata of the file X in the cache holding module 413 (S1814), and proceeds to S1811. Steps S1813 and S1814 are the same as S1609 and S1610.

In the case where it is determined that the cache holding module 413 stores metadata of the file X, the cache server control module 411 gets data of the file X from the file server 105 (S1811), stores the obtained data of the file X in the cache holding module 413 (S 1812), and proceeds to S1806.

In the case where it is determined in S1805 that the cache holding module 413 stores data of the file X, the cache server control module 411 gets the data of the file X from the cache holding module 413 (S1806).

The cache server control module 411 updates the metadata of the file X (S1807). This step is the same as S1709.

The cache server control module 411 records an access log entry indicating that the business location Z has opened the file X (S1808). This step is the same as S1607.

The cache server control module 411 sends the data of the file X to the file server 105 and ends the procedure (S1809).

In the case where it is determined in S1803 that the master cache server of the file X is not its own cache server, the cache server control module 411 refers to the master cache server control table 315 and requests one of the other cache servers that is the master cache server of the file X to execute the file opening procedure (S1815).

Specifically, the cache server control module 411 sends to one of the other cache servers that is the master cache server of the file X a file opening procedure execution request, which includes the absolute path of the file X, the user Y, the business location Z, and lock information. Receiving the execution request, one of the other cache servers that is the master cache server of the file X executes Steps S1801 to S1817 and sends the result of executing the steps to the cache server control module 411 that has made the execution request.

The cache server control module 411 determines whether or not the result sent from one of the other cache servers that is the master cache server of the file X is an error (S1816).

In the case where it is determined that the result sent from one of the other cache servers that is the master cache server of the file X is not an error, the cache server control module 411 proceeds to S 1809.

In the case where it is determined that the result sent from one of the other cache servers that is the master cache server of the file X is an error, the cache server control module 411 proceeds to S 18 17.

In a variation for speeding up S2401 of a master cache server updating procedure, which is described later, metadata stored in the cache server is sent to the file server 105 after the data updating procedure is executed.

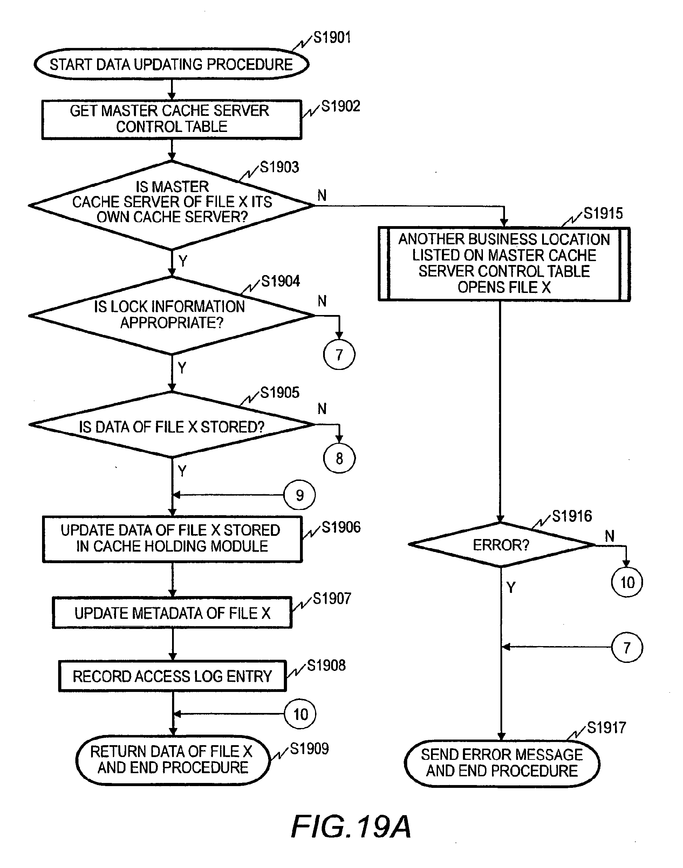

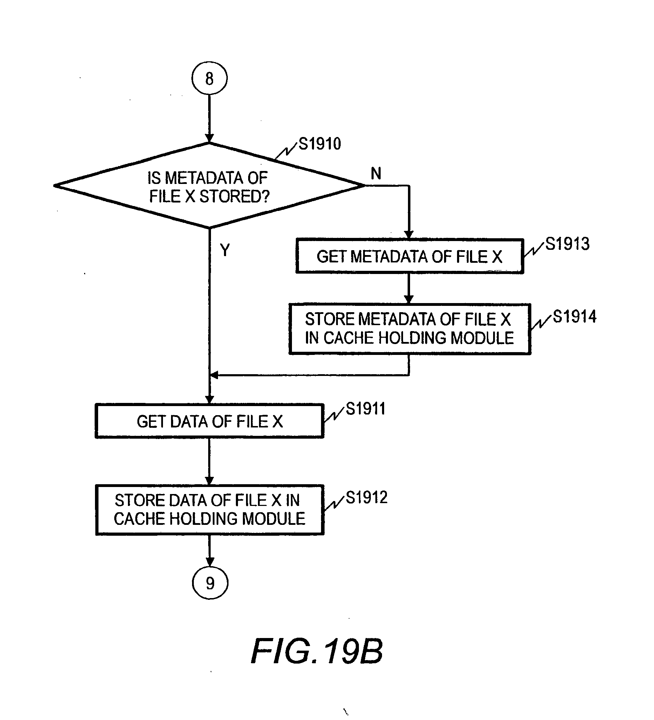

FIGS. 19A and 19B are flow charts illustrating a procedure that is executed by the file data updating function of the cache server control module 411 according to the embodiment of this invention.

The procedure of FIGS. 19A and 19B is executed in the case where the command extracted in S1503 is a command to execute the data updating procedure.

The command extracted in S1503 includes the absolute path of a file whose data is to be updated, information for identifying a user who is attempting to update the data, the business location name of a business location where the user is located, and lock information.

In the following description, the file whose data is to be updated is denoted by X, the user name of the user who is attempting to update the data is denoted by Y, and the business location name of the business location where the user Y is located is denoted by Z.

The cache server control module 411 obtains the absolute path of the file X, the user Y, the business location Z, and lock information which are included in the command extracted in S1503, and starts the data updating procedure (S1901). The command extracted in S1503 may not include a business location name and, in this case, the procedure is executed with the name of a business location where the cache server 108 itself is located as the user's business location name.

The cache server control module 411 gets the master cache server control table 315 from the cache management server 107 (S1902). This step is the same as S1602.

The cache server control module 411 refers to the obtained master cache server control table 315 to determine whether or not the master cache server of the file X is its own cache server (S1903). This step is the same as S1603.

In the case where it is determined that the master cache server of the file X is its own cache server, the cache server control module 411 determines whether or not the obtained lock information is appropriate (S1904). This step is the same as S1804.

In the case where it is determined that the obtained lock information is not appropriate, the cache server control module 411 sends an error message to the user Y and ends the procedure (S1917). This step is the same as S1613.

In the case where it is determined that the obtained lock information is appropriate, the cache server control module 411 determines whether or not the cache holding module 413 stores data of the file X (S1905).

In the case where it is determined that the cache holding module 413 does not store data of the file X, the cache server control module 411 determines whether or not the cache holding module 413 stores metadata of the file X (S 1910). This step is the same as S 1604.

In the case where it is determined that the cache holding module 413 does not store metadata of the file X, the cache server control module 411 gets metadata of the file X from the file server 105 (S1913), stores the obtained metadata of the file X in the cache holding module 413 (S1914), and proceeds to S 1911. Steps S1913 and S1914 are the same as S1609 and S1610.

In the case where it is determined that the cache holding module 413 stores metadata of the file X, the cache server control module 411 gets data of the file X from the file server 105 (S1911), stores the obtained data of the file X in the cache holding module 413 (S1912), and proceeds to S 1906. Steps S1911 and S1912 are the same as S1811 and S1812.

In the case where it is determined in S1905 that the cache holding module 413 stores data of the file X, the cache server control module 411 update the data of the file X stored in the cache holding module 413 (S1906).

The cache server control module 411 updates the metadata of the file X (S1907). This step is the same as S1709.

The cache server control module 411 records an access log entry indicating that the business location Z has updated the file X (S1908). This step is the same as S1607.

The cache server control module 411 sends the data of the file X to the file server 105 and ends the procedure (S1909).

In the case where it is determined in S1903 that the master cache server of the file X is not its own cache server, the cache server control module 411 refers to the master cache server control table 315 and requests one of the other cache servers that is the master cache server of the file X to execute the file opening procedure (S1915).

Specifically, the cache server control module 411 sends to one of the other cache servers that is the master cache server of the file X a data updating procedure execution request, which includes the absolute path of the file X, the user Y, the business location Z, and lock information. Receiving the execution request, one of the other cache servers that is the master cache server of the file X executes Steps S1901 to S1917 and sends the result of executing the steps to the cache server control module 411 that has made the execution request.

The cache server control module 411 determines whether or not the result sent from one of the other cache servers that is the master cache server of the file X is an error (S1916).

In the case where it is determined that the result sent from one of the other cache servers that is the master cache server of the file X is not an error, the cache server control module 411 proceeds to S1909.

In the case where it is determined that the result sent from one of the other cache servers that is the master cache server of the file X is an error, the cache server control module 411 proceeds to S 1917.

In a variation for speeding up S2401 of a master cache server updating procedure, which is described later, metadata stored in the cache server is sent to the file server 105 after the data updating procedure is executed.

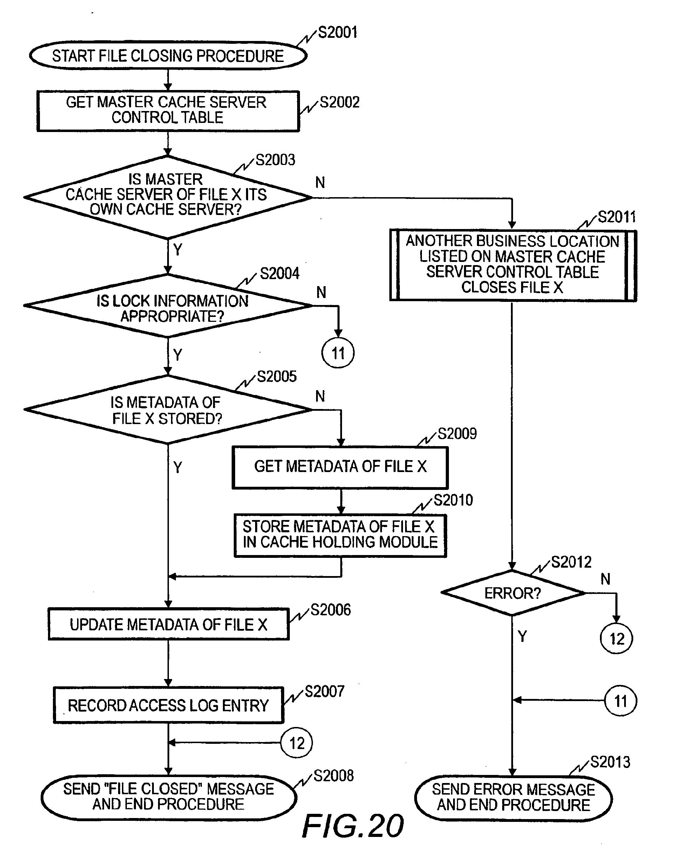

FIG. 20 is a flow chart illustrating a procedure that is executed by the file closing function of the cache server control module 411 according to the embodiment of this invention.

The procedure of FIG. 20 is executed in the case where the command extracted in S 1503 is a command to execute a file closing procedure.

The command extracted in S1503 includes the absolute path of a file to be closed, the user name of a user who is attempting to close the file, the business location name of a business location where the user is located, and lock information.

In the following description, the file to be closed is denoted by X, the user name of the user who is attempting to close the file X is denoted by Y, and the business location name of the business location where the user Y is located is denoted by Z.

The cache server control module 411 obtains the absolute path of the file X, the user Y, the business location Z, and lock information which are included in the command extracted in S1503, and starts the file closing procedure (S2001). The command extracted in S1503 may not include a business location name and, in this case, the procedure is executed with the name of a business location where the cache server 108 itself is located as the user's business location name.

The cache server control module 411 gets the master cache server control table 315 from the cache management server 107 (S2002). This step is the same as S1602.

The cache server control module 411 refers to the obtained master cache server control table 315 to determine whether or not the master cache server of the file X is its own cache server (S2003). This step is the same as S1603.

In the case where it is determined that the master cache server of the file X is its own cache server, the cache server control module 411 determines whether or not the obtained lock information is appropriate (S2004). This step is the same as S1804.

In the case where it is determined that the obtained lock information is not appropriate, the cache server control module 411 sends an error message to the user Y and ends the procedure (S2013). This step is the same as S1613.

In the case where it is determined that the obtained lock information is appropriate, the cache server control module 411 determines whether or not the cache holding module 413 stores metadata of the file X (S2005). This step is the same as S1604.

In the case where it is determined that the cache holding module 413 does not store metadata of the file X, the cache server control module 411 gets metadata of the file X from the file server 105 (S2009), stores the obtained metadata of the file X in the cache holding module 413 (S2010), and proceeds to S2006. Steps S2009 and S2010 are the same as S1609 and S1610.

In the case where it is determined that the cache holding module 413 stores metadata of the file X, the cache server control module 411 updates the metadata of the file X (S2006). This step is the same as S1709.

The cache server control module 411 records an access log entry indicating that the business location Z has closed the lock on the file X (S2007). This step is the same as S1607.

The cache server control module 411 sends to the user a "file closed" message, which indicates that the file closing procedure is completed, and ends the procedure (S2008).

In the case where it is determined in S2003 that the master cache server of the file X is not its own cache server, the cache server control module 411 refers to the master cache server control table 315 and requests one of the other cache servers that is the master cache server of the file X to execute the file closing procedure (S2011).

Specifically, the cache server control module 411 sends to one of the other cache servers that is the master cache server of the file X a file closing procedure execution request, which includes the absolute path of the file X, the user Y, the business location Z, and lock information. Receiving the execution request, one of the other cache servers that is the master cache server of the file X executes Steps S2001 to S2013 and sends the result of executing the steps to the cache server control module 411 that has made the execution request.

The cache server control module 411 determines whether or not the result sent from one of the other cache servers that is the master cache server of the file X is an error (S2012).

In the case where it is determined that the result sent from one of the other cache servers that is the master cache server of the file X is not an error, the cache server control module 411 proceeds to S2008.

In the case where it is determined that the result sent from one of the other cache servers that is the master cache server of the file X is an error, the cache server control module 411 proceeds to S2013.

In a variation for speeding up S2401 of a master cache server updating procedure, which is described later, metadata stored in the cache server is sent to the file server 105 after the data updating procedure is executed.

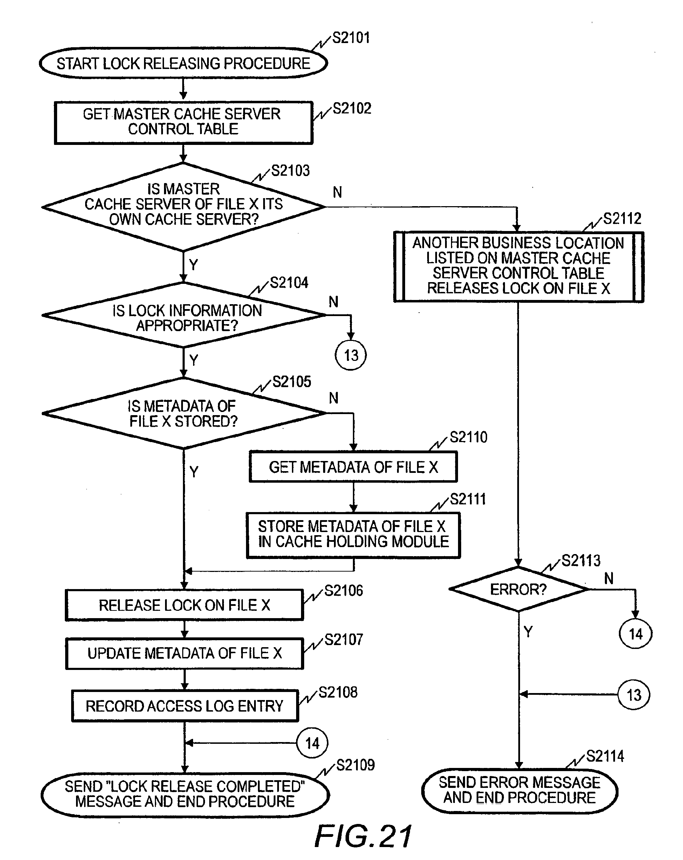

FIG. 21 is a flow chart illustrating a procedure that is executed by the file lock releasing function of the cache server control module 411 according to the embodiment of this invention.

The procedure of FIG. 21 is executed in the case where the command extracted in S 1503 is a command to execute a lock releasing procedure.

The command extracted in S1503 includes the absolute path of a file for which a lock is to be released, the user name of a user who is attempting to release a lock on the file, the business location name of a business location where the user is located, and lock information.

In the following description, the file for which a lock is to be released is denoted by X, the user name of the user who is attempting to release the lock on the file X is denoted by Y, and the business location name of the business location where the user Y is located is denoted by Z.

The cache server control module 411 obtains the absolute path of the file X, the user Y, the business location Z, and lock information which are included in the command extracted in S1503, and starts the lock releasing procedure (S2101). The command extracted in S1503 may not include a business location name and, in this case, the procedure is executed with the name of a business location where the cache server 108 itself is located as the user's business location name.

The cache server control module 411 gets the master cache server control table 315 from the cache management server 107 (S2102). This step is the same as S1602.

The cache server control module 411 refers to the obtained master cache server control table 315 to determine whether or not the master cache server of the file X is its own cache server (S2103). This step is the same as S1603.

In the case where it is determined that the master cache server of the file X is its own cache server, the cache server control module 411 determines whether or not the obtained lock information is appropriate (S2104). This step is the same as S1804.

In the case where it is determined that the obtained lock information is not appropriate, the cache server control module 411 sends an error message to the user Y and ends the procedure (S2114). This step is the same as S1613.

In the case where it is determined that the obtained lock information is appropriate, the cache server control module 411 determines whether or not the cache holding module 413 stores metadata of the file X (S2105). This step is the same as S1604.

In the case where it is determined that the cache holding module 413 does not store metadata of the file X, the cache server control module 411 gets metadata of the file X from the file server 105 (S2110), stores the obtained metadata of the file X in the cache holding module 413 (S2111), and proceeds to S2106. Steps S2110 and S2111 are the same as S 1609 and S1610.

In the case where it is determined that the cache holding module 413 stores metadata of the file X, the cache server control module 411 releases the lock on the file X (S2106). Specifically, the cache server control module 411 deletes an entry for the file X from the lock management table 416.

The cache server control module 411 updates the metadata of the file X (S2107). This step is the same as S1709.

The cache server control module 411 records an access log entry indicating that the business location Z has released the lock on the file X (S2108). This step is the same as S1607.

The cache server control module 411 sends to the user a "lock release completed" message, which indicates that the lock releasing procedure is completed, and ends the procedure (S2109).

In the case where it is determined in S2103 that the master cache server of the file X is not its own cache server, the cache server control module 411 refers to the master cache server control table 315 and requests one of the other cache servers that is the master cache server of the file X to execute the lock releasing procedure (S2112).

Specifically, the cache server control module 411 sends to one of the other cache servers that is the master cache server of the file X a lock releasing procedure execution request, which contains the absolute path of the file X, the user Y, the business location Z, and lock information. Receiving the execution request, one of the other cache servers that is the master cache server of the file X executes Steps S2101 to S2114 and sends the result of executing the steps to the cache server control module 411 that has made the execution request.

The cache server control module 411 determines whether or not the result sent from one of the other cache servers that is the master cache server of the file X is an error (S2113).

In the case where it is determined that the result sent from one of the other cache servers that is the master cache server of the file X is not an error, the cache server control module 411 proceeds to S2109.

In the case where it is determined that the result sent from one of the other cache servers that is the master cache server of the file X is an error, the cache server control module 411 proceeds to S2114.

In a variation for speeding up S2401 of a master cache server updating procedure, which is described later, cashed metadata is reflected to the file server (102) after the data updating procedure is executed.

The cache management server 107 is described next.

FIG. 22 is a flow chart illustrating a procedure that is executed by the cache management server 107 after booting according to the embodiment of this invention.

The cache management server 107, after booted, starts this procedure (S2201), and initializes the queue management module 312, the master cache server control table control UI 313, and the master cache server control table 315 (S2202).

In the initialization step, the cache management server 107 instructs the queue management module 312 to create a management queue and a control queue.

The management queue is a queue for receiving a management command from the master cache server control table control UI 313. A management command is a command that is not for getting or updating data and metadata of a file and, in this embodiment, a command that instructs to execute a master cache server updating procedure or an unequal access frequency compiling procedure. The control queue is a queue for receiving control information from the cache servers. Control information is information exchanged while procedures for fulfilling a management command are executed.

The cache management server 107 extracts a command from the management queue (S2203), executes the extracted command (S2204), and returns to S2203 to repeatedly execute Steps S2203 and S2204. In other words, a procedure for fulfilling an extracted command is executed.

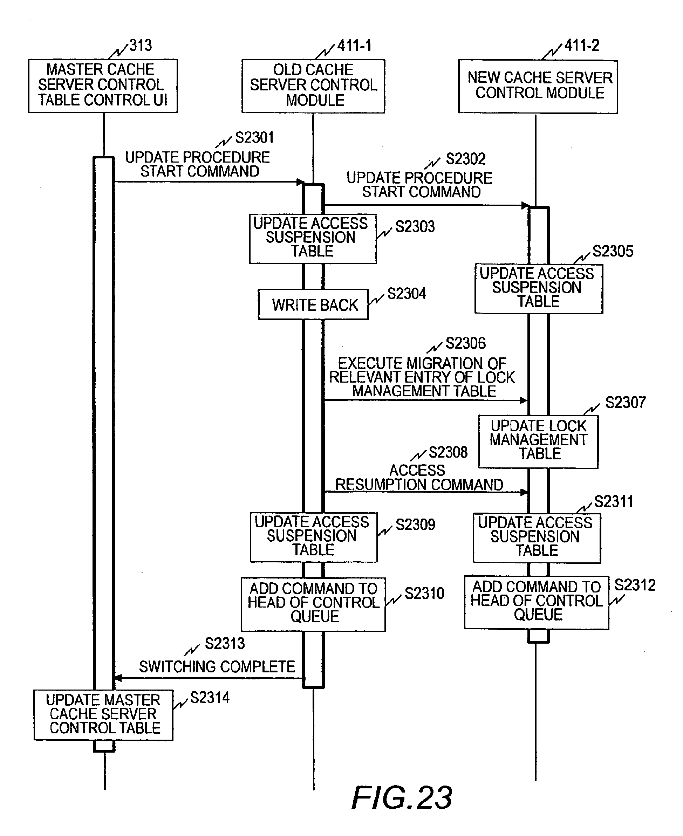

The functions of the master cache server control table control UI 313 of the cache management server 107 are described next with reference to FIGS. 23 to 28.

FIG. 23 is a sequence diagram outlining a procedure that is executed by the master cache server switching UI function of the master cache server control table control UI 313 and by the master cache server switching function of each cache server control module 411 according to the embodiment of this invention.

A case of switching the master cache server from the cache server 108 to the cache server 110 is described in this embodiment. In the following description, the cache server 108 is referred to as old cache server 108 and the cache server 110 is referred to as new cache server 110. The cache server control module 411 of the cache server 108 is referred to as old cache server control module 411-1 and the cache server control module 411 of the cache server 110 is referred to as new cache server control module 411-2.

The master cache server control table control UI 313 starts to execute the master cache server switching UI function, and sends an update procedure start command to the old cache server control module 411-1 of the old cache server 108, which is the current master cache server (S2301).

The update procedure start command includes the subdirectory path name of a subdirectory that the old cache server 108 manages as its master cache server, the identifier of the old cache server 108, and the identifier of the new cache server 110. The identifier of the old cache server 108 and the identifier of the new cache server 110 in this embodiment are the names of the cache server 108 and the cache server 110.

In the following description, the subdirectory path name included in the update procedure start command is "subdirectory path A," the name of the old cache server 108 is "cache server B," and the name of the new cache server 110 is "cache server C."

The old cache server control module 411-1 receives the update procedure start command from the master cache server control table control UI 313, and starts the master cache server updating procedure.

The old cache server control module 411-1 first refers to the name of the new cache server 110 which is contained in the update procedure start command, thereby identifying the new cache server 110, and sends an update procedure start command to the new cache server control module 411-2 of the new cache server 110 (S2302). The update procedure start command contains the subdirectory path name.

The old cache server control module 411-1 updates its access suspension management table 417 (S2303). Receiving the update procedure start command from the old cache server control module 411-1, the new cache server control module 411-2, too, updates its access suspension management table 417 (S2305).

Specifically, the old cache server control module 411-1 and the new cache server control module 411-2 add an entry that holds the subdirectory path A as the subdirectory path name 601 to their respective access suspension management tables 417.

Through Steps S2303 and S2305, any command relevant to a file under the subdirectory path A added to the access suspension management table 417 is stored in the access suspension queue. In other words, Steps S2303 and S2305 make the old cache server control module 411-1 and the new cache server control module 411-2 available for access from other cache servers. The switching of the master cache server is thus accomplished without suspending commands from other cache servers.

The old cache server control module 411-1 writes back a cache (data and metadata) of a file under the subdirectory path A that has been stored in the cache holding module 413 to the file server 105 (S2304). The cache of a file under the subdirectory path A may be sent to the new cache server 110.

The old cache server control module 411-1 executes the migration of a relevant entry of the lock management table 416 to the new cache server control module 411-2 (S2306).

Specifically, the old cache server control module 411-1 extracts from the lock management table 416 an entry holding information that is associated with a file under the subdirectory path A, sends information contained in the extracted entry to the new cache server control module 411-2, and deletes this entry from its lock management table 416.

Based on this information associated with a file under the subdirectory path A, the new cache server control module 411-2 updates its lock management table 416 (S2307).

Specifically, the new cache server control module 411-2 adds the information associated with a file under the subdirectory path A to its lock management table 416. Through this step, the master cache server is switched from the old cache server 108 to the new cache server 110.

The old cache server control module 411-1 sends to the new cache server control module 411-2 a command to start granting access to a file under the subdirectory path A (S2308). This access resumption command is stored in the control queue of the new cache server control module 411-2.

The old cache server control module 411-1 updates its access suspension management table 417 (S2309). Receiving the access resumption command, the new cache server control module 411-2, too, updates its access suspension management table 417 (S2311).

Specifically, the old cache server control module 411-1 and the new cache server control module 411-2 delete an entry that holds the subdirectory path A as the subdirectory path name 601 from their respective access suspension management tables 417.

The old cache server control module 411-1 inserts commands that have been stored in the access suspension queue into the command queue and pushes the commands to the head of the command queue (S2310).

The commands relevant to a file under the subdirectory path A which have been stored in the access suspension queue are sent to the new cache server control module 411-2, which is the new master cache server of the subdirectory path A.

The new cache server control module 411-2 inserts commands that have been stored in the access suspension queue into the command queue and pushes the commands to the head of the command queue (S2312).

Being the new master cache server of the subdirectory path A, the new cache server control module 411-2 executes the commands relevant to a file under the subdirectory path A which have been stored in the access suspension queue.

At this point, the old cache server control module 411-1 and the new cache server control module 411-2 alone are aware of the switch of the master cache server, whereas the other cache servers have no way of recognizing that the master cache server has been switched.

The old cache server control module 411-1 sends a notification of the completion of the master cache server updating procedure to the master cache server control table control UI 313 (S2313). This notification is input to the control queue of the cache management server 107.

Receiving the completion notification, the master cache server control table control UI 313 updates the master cache server control table 315 and ends the procedure (S2314). With the update of the master cache server control table 315, the other cache servers recognize that the master cache server has been switched from the old cache server control module 411-1 to the new cache server control module 411-2.

Through the procedure described above, the master cache server can be switched between the old cache server control module 411-1 and the new cache server control module 411-2 without requiring other cache servers than the old cache server 108 and the new cache server 110 to be aware of the switch and without affecting the other cache servers despite their unawareness of the switch.

Described below are details of the respective procedures of the master cache server control table control UI 313, the old cache server control module 411-1, and the new cache server control module 411-2.

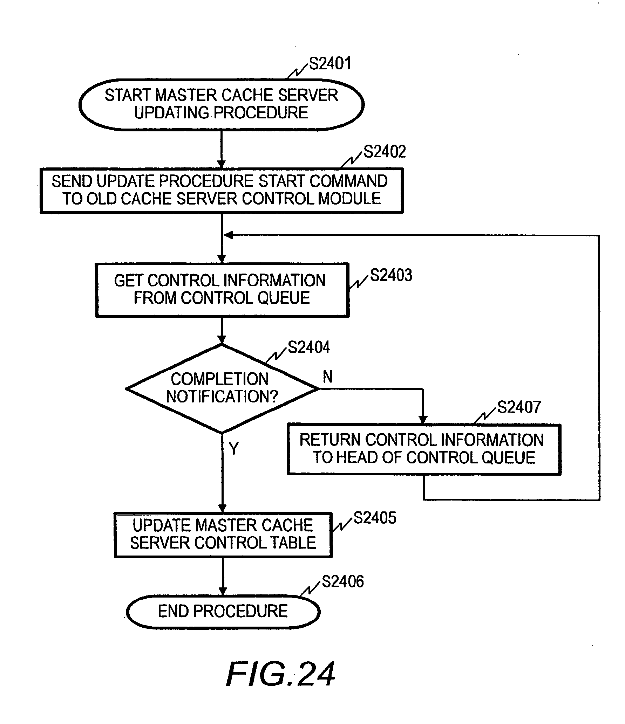

FIG. 24 is a flow chart illustrating details of the procedure that is executed by the master cache server control table control UI 313 during the master cache server updating procedure according to the embodiment of this invention.

The master cache server control table control UI 313 receives from the control terminal 104 a command to start the master cache server updating procedure, and starts the master cache server updating procedure (S2401). The command to start the master cache server updating procedure includes the subdirectory path name, the cache server B, and the cache server C.

The master cache server control table control UI 313 sends a command to start the master cache server updating procedure to the old cache server control module 411-1 (S2402).

Specifically, the master cache server control table control UI 313 stores the command to start the master cache server updating procedure in the command queue with the subdirectory path A and the cache server C as an argument, and instructs the old cache server 108 to start the master cache server updating procedure.

The master cache server control table control UI 313 extracts control information from the control queue (S2403), and determines whether or not the extracted control information is a notification of the completion of the master cache server updating procedure (S2404).

In the case where it is determined that the extracted control information is not a notification of the completion of the master cache server updating procedure, the master cache server control table control UI 313 returns the extracted control information to the head of the control queue (S2407), and executes Steps S2403 to S2407.

In the case where it is determined that the extracted control information is a notification of the completion of the master cache server updating procedure, the master cache server control table control UI 313 updates the master cache server control table 315 (S2405) and ends the procedure (S2406).

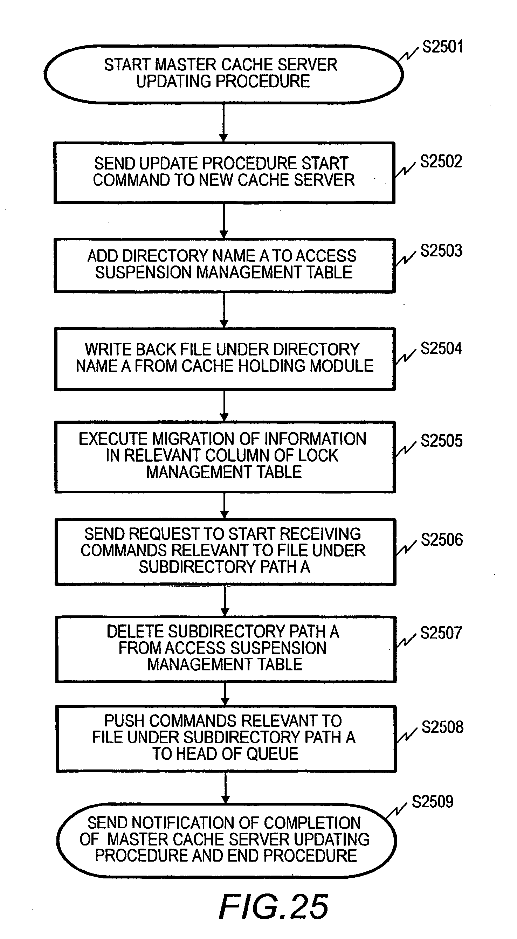

FIG. 25 is a flow chart illustrating details of the procedure that is executed by the old cache server control module 411-1 of the old cache server 108 during the master cache server updating procedure according to the embodiment of this invention.

The old cache server control module 411-1 receives an update procedure start command from the master cache server control table control UI 313, and starts the master cache server updating procedure (S2501). Specifically, the update procedure start command is input to the command queue and the old cache server control module 411-1 starts the procedure of FIG. 15. In this case, it is determined in S1504 that the extracted command involves access to a subdirectory path to which access is currently suspended.

This update procedure start command contains the subdirectory path name and the cache server C.

The old cache server control module 411-1 sends an update procedure start command to the new cache server control module 411-2 (S2502). This update procedure start command includes the subdirectory path name.

The old cache server control module 411-1 adds an entry for the subdirectory path A to the access suspension management table 417 (S2503).

The old cache server control module 411-1 writes back a cache of a file under the subdirectory path A that has been stored in the cache holding module 413 to the file server 105 (S2504). The cache of a file under the subdirectory path A may be sent to the new cache server 110.

The old cache server control module 411-1 sends lock information of a file under the subdirectory path A to the new cache server control module 411-2 (S2505).

Specifically, the old cache server control module 411-1 extracts from the lock management table 416 an entry holding information that is associated with a file under the subdirectory path A, sends information held in the extracted entry to the new cache server control module 411-2, and deletes this entry from the lock management table 416.

The information held in the entry of the lock management table 416 that is for a file under the subdirectory path A is input to the control queue of the new cache server 110.

The old cache server control module 411-1 sends to the new cache server control module 411-2 a request to start receiving commands relevant to a file under the subdirectory path A (S2506). This access resumption request is input to the control queue of the new cache server 110.

The old cache server control module 411-1 deletes an entry for the subdirectory path A from the access suspension management table 417 (S2507).

The old cache server control module 411-1 inserts commands relevant to a file under the subdirectory path A into the command queue and pushes the commands to the head of the command queue (S2508).

Specifically, the old cache server control module 411-1 searches the access suspension queue for commands relevant to a file under the subdirectory path A, and inserts the found commands relevant to a file under the subdirectory path A into the command queue at the head of the queue.

The old cache server control module 411-1 sends a notification of the completion of the master cache server updating procedure to the master cache server control table control UI 313, and ends the procedure (S2509).

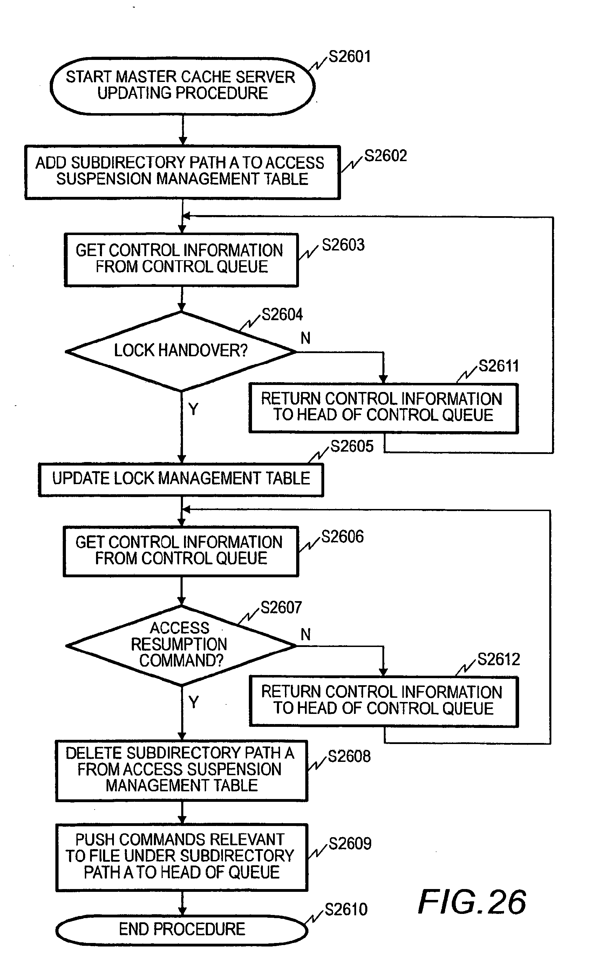

FIG. 26 is a flow chart illustrating details of the procedure that is executed by the new cache server control module 411-2 of the new cache server 110 during the master cache server updating procedure according to the embodiment of this invention.

The new cache server control module 411-2 receives from the old cache server control module 411-1 a request to start the master cache server updating procedure, and starts the master cache server updating procedure (S2601).

The start request is input to the command queue and the new cache server control module 411-2 starts the procedure of FIG. 15. In this case, it is determined in S1504 that the extracted command involves access to a subdirectory path to which access is currently suspended.

This start request command contains the subdirectory path A.

The new cache server control module 411-2 adds an entry for the subdirectory path A to the access suspension management table 417 (S2602).

The new cache server control module 411-2 extracts control information from the control queue (S2603), and determines whether or not the extracted control information is information about the handover of a lock (S2604).

Specifically, the new cache server control module 411-2 determines whether or not the extracted control information is information about a lock on a file under the subdirectory path A.

In the case where it is determined that the extracted control information is not information about the handover of a lock, the new cache server control module 411-2 returns the extracted control information to the head of the control queue (S2611), and executes Steps S2601 to S2612.

In the case where it is determined that the extracted control information is information about the handover of a lock, the new cache server control module 411-2 updates the lock management table 416 (S2605).

Specifically, the new cache server control module 411-2 adds information about a lock on a file under the subdirectory path A to the lock management table 416.

The new cache server control module 411-2 extracts control information from the control queue (S2606), and determines whether or not the extracted control information is a command to start receiving commands relevant to a file under the subdirectory path A (S2607).

In the case where it is determined that the extracted control information is not a command to start receiving commands relevant to a file under the subdirectory path A, the new cache server control module 411-2 returns the extracted control information to the head of the control queue (S2612), and executes Steps S2606 to S2612.

In the case where it is determined that the extracted control information is a command to start receiving commands relevant to a file under the subdirectory path A, the new cache server control module 411-2 updates the access suspension management table 417 (S2608).

Specifically, the new cache server control module 411-2 deletes an entry for the subdirectory path A from the access suspension management table 417.

The new cache server control module 411-2 inserts commands relevant to a file under the subdirectory path A into the command queue at the head of the queue (S2609), and ends the procedure (S2610).

Specifically, the new cache server control module 411-2 searches the access suspension queue for commands relevant to a file under the subdirectory path A, and places the found commands relevant to a file under the subdirectory path A at the head of the command queue.

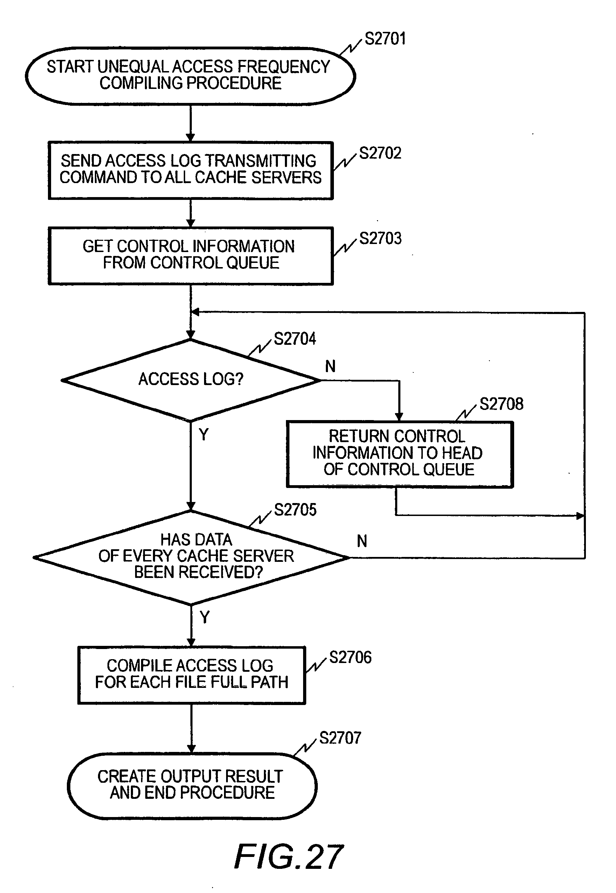

FIG. 27 is a flow chart illustrating a procedure that is executed by the unequal access frequency compiling UI function of the master cache server control table control UI 313 of the cache management server 107 according to the embodiment of this invention.

The master cache server control table control UI 313 receives from the control terminal 104 a request to start the unequal access frequency compiling procedure, and starts the unequal access frequency compiling procedure (S2701). The master cache server control table control UI 313 may execute this procedure periodically.

The master cache server control table control UI 313 sends an access log transmitting command to all cache servers (in this embodiment, the cache servers 106, 108, and 110) (S2702).

The access log transmitting command is input to the command queue in each of the cache servers (in this embodiment, the cache servers 106, 108, and 110). The result of a procedure executed in response to the access log transmitting command is output to the control queue of the cache management server 107. The master cache server control table control UI 313 also gets an access log from the control queue of the cache management server 107.

The master cache server control table control UI 313 gets control information from the control queue of the cache management server 107 (S2703), and determines whether or not the obtained control information is an access log (S2704).

In the case where it is determined that the obtained control information is not an access log, the master cache server control table control UI 313 returns the obtained control information to the head of the control queue (S2708), and executes Steps S2704 to S2708.

In the case where it is determined that the obtained control information is an access log, the master cache server control table control UI 313 determines whether or not an access log has been received from every one of the cache servers (in this embodiment, the cache servers 106, 108, and 110) (S2705).

This determination is made by, for example, determining whether or not the number of times an access log is received matches the number of cache servers in the computer system.

In the case where it is determined that not every one of the cache servers (in this embodiment, the cache servers 106, 108, and 110) has sent an access log, the master cache server control table control UI 313 returns to S2704 and executes Steps S2704 to S2708.

In the case where it is determined that an access log has been received from every one of the cache servers (in this embodiment, the cache servers 106, 108, and 110), the master cache server control table control UI 313 compiles access logs for each of all file absolute paths (S2706), creates output information for outputting the result of the compilation, and ends the procedure (S2707).

Specifically, the master cache server control table control UI 313 calculates the access count of each file absolute path on a cache server basis. For example, with respect to a file absolute path "/a/b/c.txt," the access count of the cache server 108 in the business location A 102 is calculated as ninety-five and the access count of the cache server 110 in the business location B 103 is calculated as five. In the case of a subdirectory path such as "/a/b/," the access count is calculated for every file under the subdirectory.

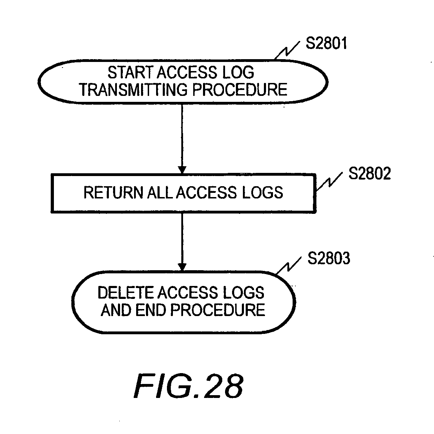

FIG. 28 is a flow chart illustrating a procedure that is executed by the cache servers 108 and 110 according to the embodiment of this invention when an access log transmitting command is received.

In the cache servers 108 and 110 each, the cache server control module 411 receives an access log transmitting command from the cache management server 107 and starts an access log transmitting procedure (S2801).

The cache server control module 411 sends every access log stored in the access log holding module 414 to the control queue of the cache management server 107 (S2802).

The cache server control module 411 deletes every access log stored in the access log holding module 414 and ends the procedure (S2803).

Through the procedures described above, the access count is obtained for each subdirectory on a cache server basis.

In this embodiment, the master cache server of all files is initially the cache server 106, which is located in the central business location 101. After the execution of procedures begins, the initial master cache server is switched to cache servers in other business locations, starting from subdirectories that have a large access frequency difference among cache servers, namely, a high access count. The control terminal 104 outputs a trigger to switch a master cache server.

A possible use case in this setup is as follows:
1. The administrator uses the control terminal 104 to execute the unequal access frequency compiling UI function of the master cache server control table control UI 313, and gets an access log of each subdirectory;
2. Based on the obtained access log, the administrator identifies a subdirectory that has a large access frequency difference among cache servers; and
3. The administrator uses the control terminal 104 to execute the master cache server switching UI function of the master cache server control table control UI 313, and switches the master cache server for each identified subdirectory.

Another possible use case is automatic switching of the master cache server. In this case, conditions for identifying unequal access frequency need to be set in advance. An example of conditions for identifying unequal access frequency is given below:
1. The interval of compiling unequal access frequency: hourly;
2. The threshold for unequal access frequency: 90% or higher of overall access to the system; and
3. The threshold for equal access frequency: 70% or higher of the overall access to the system.

Using these identification conditions, the switching of the master cache server may be managed automatically as follows:
1. The control terminal 104 includes a timer and, when the interval of compiling unequal access frequency elapses on the timer, executes this procedure;
2. The control terminal 104 gets a master cache server control table from the master cache server control table control UI 313;
3. The control terminal 104 executes the unequal access frequency compiling UI function of the master cache server control table control UI 313, and gets an access log of each subdirectory;
4. Based on the obtained access logs, the control terminal 104 extracts any subdirectory where a cache server accesses more frequently than the threshold for unequal access frequency, and whose master cache server listed on the master cache server control table obtained in Step 2 is not this unproportionally frequently accessing cache server;
5. If the extracted subdirectories include those in a direct parent-child relation, the control terminal 104 chooses the host subdirectory as a target subdirectory whose master cache server is to be switched.
   Specifically, in the case where subdirectories "/a/b/c" and "/a/b" are extracted, choosing "/a/b" as a target of master cache server switching automatically makes "/a/b/c" a target of master cache server switching as well;
6. The control terminal 104 executes the unequal access frequency compiling UI function of the master cache server control table control UI 313, to thereby switch the master cache server of a target subdirectory from the cache server listed on the master cache server control table to the cache server extracted in Step 4;
7. Based on the obtained access logs, the control terminal 104 extracts any subdirectory where cache servers access less frequently than the threshold for equal access frequency, and whose master cache server listed on the master cache server control table obtained in Step 2 is not the cache server that accesses the subdirectory most frequently of all these infrequently accessing cache servers;
8. If the subdirectories extracted in Step 7 include those in a direct parent-child relation, the control terminal 104 chooses the host subdirectory as a target subdirectory whose master cache server is to be switched. Specifically, in the case where subdirectories "/a/b/c" and "/a/b" are extracted, choosing "/a/b" as a target of master cache server switching automatically makes "/a/b/c" a target of master cache server switching as well; and
9. The control terminal 104 executes the unequal access frequency compiling UI function of the master cache server control table control UI 313, to thereby switch the master cache server of a target subdirectory extracted in Step 8 from the cache server listed on the master cache server control table to the cache server 106 of the central business location 101.

In still another possible use case, the master cache server of a subtree in a file system is switched periodically with time as a trigger.

The method may be applied to, for example, a corporation having a plurality of business locations over the world which operates in different time zones due to the time difference or the like.

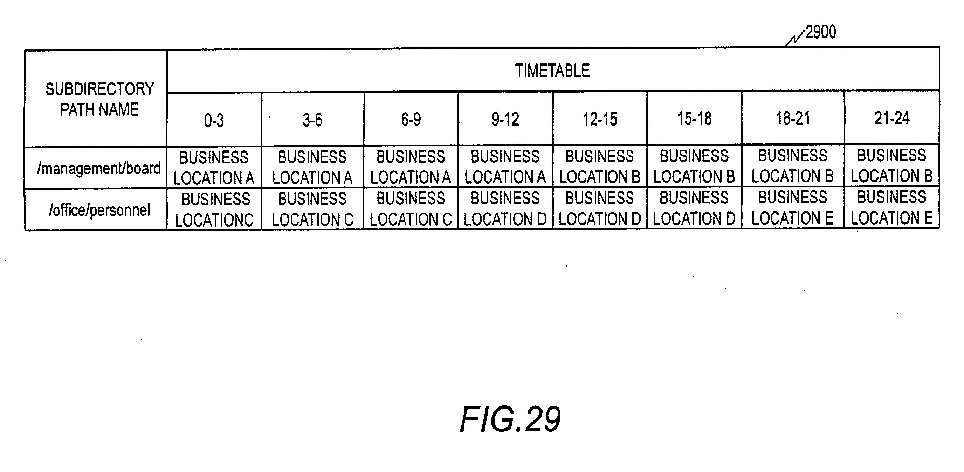

In this case, the administrator registers a timetable 2900 of FIG. 29 in the control terminal 104 in advance.

FIG. 29 is a diagram illustrating a timetable 2900 which is provided in the control terminal 104 according to the embodiment of this invention.

The timetable 2900 stores, for each subdirectory path, a time based on the time zone of the control terminal 104 or GMT, and a business location where the master cache server of the subdirectory path is located.

In the example of FIG. 29, master cache server management is on a three-hour schedule.

Specifically, the master cache server of a subdirectory under a subdirectory path name "/management/board" is the cache server of a business location A from 0 to 12 o'clock, and the cache server of a business location B from 12 to 24 o'clock.

The master cache server of a subdirectory under a subdirectory path name "/office/personnel" is the cache server of a business location C from 0 to 9 o'clock, the cache server of a business location D from 9 to 18 o'clock, and the cache server of a business location E from 18 to 21 o'clock.

In this use case, master cache server management in which the master cache server is switched periodically is accomplished by causing the control terminal 104 to execute the following procedure when the administrator updates the timetable:
1. The control terminal 104 refers to the timetable 2900 to extract, for each subdirectory path name, times at which the business location of the master cache server is switched, and from which business location and to which business location the switch is made. In the example of FIG. 29, the master cache server of a subdirectory under "/management/board" is switched from the business location A to the business location B at 12 o'clock, and from the business location B to the business location A at 24 o'clock. The master cache server of a subdirectory under "/office/personnel" is switched from the business location C to the business location D at 9 o'clock, from the business location D to the business location E at 18 o'clock, and from the business location E to the business location C at 24 o'clock; and
2. Using the extracted information on the subdirectory path name, the time of master cache server switching, and business locations participating in the master cache server switching, the control terminal 104 registers the execution of the master cache server updating procedure illustrated in FIG. 24 to the timer of the control terminal 104. In the example of FIG. 29, the execution of the master cache server updating procedure is registered to the timer with the use of the following arguments:
   12 o'clock: subtree path = /management/board, old master cache server business location = business location A, new master cache server business location = business location B
   0 o'clock: subtree path = /management/board, old master cache server business location = business location B, new master cache server business location = business location A
   9 o'clock: subtree path = /office/personnel, old master cache server business location = business location C, new master cache server business location = business location D
   18 o'clock: subtree path = /office/personnel, old master cache server business location = business location D, new master cache server business location = business location E
   24 o'clock: subtree path = /office/personnel, old master cache server business location = business location E, new master cache server business location = business location C

The lock management table 214, the master cache server control table 315, the access suspension management table 417, and the time table 2900 in this embodiment are all stored as information in a table format. However, this invention is not limited thereto and the information can be held in any format as long as the association relation in the stored information is understood.

According to an embodiment of this invention, the master cache server of files under a subdirectory which has the administration right of the files can be switched without affecting other cache servers while maintaining the lock states of the files under the subdirectory that the master cache server manages.

While the present invention has been described in detail and pictorially in the accompanying drawings, the present invention is not limited to such detail. The scope is defined by the appended claims.

## Claims

1. A computer system including:
a file server (105) which is adapted to stores a plurality of files;
cache servers (106, 108, 110) each of which being adapted to stores cache data of the plurality of files; and
a cache management server (107) which is adapted to manages the cache servers (106, 108, 110),
wherein:
the file server (105) comprises a first processor (200) and a first memory (210) coupled to the first processor (200);
each cache server (106, 108, 110) comprises a second processor (400) and a second memory (410) coupled to the second processor (400); and
the cache management server (107) comprises a third processor (300) and a third memory (310) coupled to the third processor (300),
wherein the cache data of one of the plurality of files includes at least one of data that can be used to identify the one of the plurality of files and data that constitutes the one of the plurality of files,
wherein the cache management server (107) is adapted to manages authority information indicating which of the cache servers (106, 108, 110) has an administration right over the cache data of each of the plurality of files stored in the file server (105),
wherein the cache servers (106, 108, 110) include a first cache server (108), a second cache server (106), and a third cache server (110),
wherein the first cache server (108) comprises first lock management information for managing a lock state that indicates one of accessibility and inaccessibility of a file with the administration right thereof held by the first cache server (108),
wherein the second cache server (106) comprises second lock management information for managing a lock state that indicates one of accessibility and inaccessibility of a file with the administration right thereof held by the second cache server (106),
wherein the third cache server (110) comprises third lock management information for managing a lock state that indicates one of accessibility and inaccessibility of a file with the administration right thereof held by the third cache server (110),
wherein the plurality of files includes a first file,
wherein the first cache server (108) is adapted to obtains the authority information from the cache management server (107), in a case of receiving a command to process the first file from a first client terminal (109) coupled to the first cache server (108),
wherein the first cache server (108) is adapted to refers to the obtained authority information to determine whether or not the first cache server (108) has the administration right of cache data of the first file,
wherein the first cache server (108) is adapted to executes the command to process the first file, in a case where it is determined that the first cache server (108) has the administration right of the cache data of the first file,
wherein the first cache server (108) is adapted to sends the command to process the first file to the second cache server (106), which has the administration right of the first file, and to receives from the second cache server (106) a result of executing the command to process the first file, in a case where it is determined that the first cache server (108) does not have the administration right of the cache data of the first file,
wherein the cache management server (107) is adapted to sends to the first cache server (108) an update command for transferring the administration right of the cache data of the first file, which has been held by the first cache server (108), to the third cache server (110),
wherein the first cache server (108) is adapted to sends the update command to the third cache server (110) after receiving the update command, and to executes a first update procedure in which the first lock management information is updated so that information on a lock state of the first file migrates to the third cache server (110),
wherein the third cache server (110) is adapted to executes a second update procedure in which the third lock management information is updated so that the information on the lock state of the first file migrates to the third cache server (110) after receiving the update command,
wherein the cache management server (107) is adapted to updates the authority information so that the administration right of the cache data of the first file is changed from the first cache server (108) to the third cache server (110),
wherein the first update procedure includes:
extracting the information on the lock state of the first file from the first lock management information;
updating the first lock management information so as to delete the extracted information on the lock state of the first file;
sending the extracted information on the lock state of the first file to the third cache server (110); and
sending a response to the update command to the cache management server (107),
wherein the second update procedure includes updating the third lock management information so as to add the information on the lock state of the first file which has been received from the first cache server (108),
wherein the cache management server (107) is adapted to updates the authority information after the response to the update command is received from the first cache server (108),
**characterised in that** the first cache server (108) comprises first access management information for determining whether or not an access from one of the first client terminal (109) and another one of the cache servers (106, 110) is to a file to which access is currently suspended,
wherein the second cache server (106) is coupled to a second client terminal, and comprises second access management information for determining whether or not an access from one of the second client terminal and another one of the cache servers (108, 110) is to a file to which access is currently suspended,
wherein the third cache server (110) is coupled to a third client terminal (111), and comprises third access management information for determining whether or not an access from one of the third client terminal (111) and another one of the cache servers (106, 108) is to a file to which access is currently suspended,
wherein the first update procedure includes:
updating the first access management information so as to add information on the first file;
referring to the first access management information to determine whether or not an access to the one of the plurality of files is a command to process the first file, the access is received from the one of the first client terminal (109) and the another one of the cache servers (106, 110), in a case where the first cache server (108) receives the command to process one of the plurality of files from the one of the first client terminal (109) and the another one of the cache servers (106, 110) after the first access management information is updated;
temporarily placing the command to process the first file in a queue, in a case where the access to the one of the plurality of files is determined as the command to process the first file;
sending an access resumption command which instructs the third cache server (106) to start granting access to the first file, after the first lock management information is updated so that the extracted information on the lock state of the first file migrates to the third cache server (110); and
updating the first access management information so as to delete the added information on the first file after the access resumption command is sent, and executing, the command to process the first file which has been received from the one of the first client terminal (109) and the another one of the cache servers (106, 110) and temporarily placed in the queue, and
wherein the second update procedure includes:
updating the third access management information so as to add the information on the first file after the update command is received from the first cache server (108);
referring to the third access management information to determine whether or not a command to process the one of the plurality of files is the command to process the first file, the command is received from the one of the third client terminal (111) and the another one of the cache servers (106, 108), in a case where the third cache server (110) receives the command to process one of the plurality of files from the one of the third client terminal (111) and the another one of the cache servers (106, 108);
temporarily placing the command to process the first file in a queue, in a case where it is determined that the command to process the one of the plurality of files is the command to process the first file; and
updating the third access management information so as to delete the information on the first file after the access resumption command is received, and executing the command to process the first file which has been received from the one of the third client terminal (111) and the another one of the cache servers (106, 108) and temporarily placed in the queue.

2. The computer system according to claim 1,
wherein the authority information includes an authority control table which is adapted to store information that associates a subdirectory of a file system with one of the cache servers (106, 108, 110),
wherein the first lock management information, the second lock management information, and the third lock management information each include a lock management table (416) which is adapted to stores an identifier of one of the plurality of files, a user name of a user who has acquired a lock on the one of the plurality of files, and identification information of the acquired lock,
wherein the first access management information, the second access management information, and the third access management information each include an access management table (417) which is adapted to stores the subdirectory of the file system,
wherein the one of the cache servers (106, 108, 110) has the administration right of a plurality of files under the subdirectory that is registered in the authority control table, and
wherein the one of the cache servers (106, 108, 110) is adapted to temporarily places, in a queue, commands to process the plurality of files under the subdirectory that is registered in the access management table (417).

3. The computer system according to claim 1 or 2,
wherein the cache management server (107) is adapted to calculates, for the each of the plurality of files, a number of times of access during execution of the command to process, and
wherein, based on a condition about the number of times of the access during the execution of the command to process which is input to the cache management server (107), the update command is sent to the first cache server (108).

4. A method of data cache management for a computer system including:
a file server (105) which stores a plurality of files;
cache servers (106, 108, 110) each of which stores cache data of the plurality of files; and
a cache management server (107) which manages the cache servers (106, 108, 110),
wherein:
the file server (105) comprises a first processor (200) and a first memory (210) coupled to the first processor (200);
each cache server (106, 108, 110) comprises a second processor (400) and a second memory (410) coupled to the second processor (400); and
the cache management server (107) comprises a third processor (300) and a third memory (310) coupled to the third processor (300),
wherein the cache data of one of the plurality of files includes at least one of data that can be used to identify the one of the plurality of files and data that constitutes the one of the plurality of files,
wherein the cache management server (107) manages authority information indicating which of the cache servers (106, 108, 110) has an administration right over the cache data of each of the plurality of files stored in the file server (105),
wherein the cache servers (106, 108, 110) include a first cache server (108), a second cache server (106), and a third cache server (110),
wherein the first cache server (108) comprises first lock management information for managing a lock state that indicates one of accessibility and inaccessibility of a file with the administration right thereof held by the first cache server (108),
wherein the second cache server (106) comprises second lock management information for managing a lock state that indicates one of accessibility and inaccessibility of a file with the administration right thereof held by the second cache server (106),
wherein the third cache server (110) comprises third lock management information for managing a lock state that indicates one of accessibility and inaccessibility of a file with the administration right thereof held by the third cache server (110),
wherein the plurality of files include a first file,
the method of data cache management including:
a first step of obtaining, by the first cache server (108), the authority information from the cache management server (107), in a case of receiving a command to process the first file from a first client terminal (109) coupled to the first cache server (108);
a second step of referring, by the first cache server (108), to the obtained authority information to determine whether or not the first cache server (108) has the administration right of cache data of the first file;
a third step of executing, by the first cache server (108), the command to process the first file, in a case where it is determined that the first cache server (108) has the administration right of the cache data of the first file;
a fourth step of sending, by the first cache server (108), the command to process the first file to the second cache server (106) which has the administration right of the first file, and receiving from the second cache server (106) a result of executing the command to process the first file, in a case where it is determined that the first cache server (108) does not have the administration right of the cache data of the first file;
a fifth step of sending, by the cache management server (107), to the first cache server (108), an update command for transferring the administration right of the cache data of the first file, which has been held by the first cache server (108), to the third cache server (110);
a sixth step of sending, by the first cache server (108), the update command to the third cache server (110) after receiving the update command, and executing a first update procedure in which the first lock management information is updated so that information on a lock state of the first file migrates to the third cache server (110);
a seventh step of executing, by the third cache server (110) a second update procedure in which the third lock management information is updated so that the information on the lock state of the first file migrates to the third cache server (110) after receiving the update command; and
an eighth step of updating, by the cache management server (107), the authority information so that the administration right of the cache data of the first file is changed from the first cache server (108) to the third cache server (110),
wherein the sixth step includes:
extracting, by the first cache server (108), the information on the lock state of the first file from the first lock management information;
updating, by the first cache server (108), the first lock management information so as to delete the extracted information on the lock state of the first file;
sending, by the first cache server (108), the extracted information on the lock state of the first file to the third cache server (110); and
sending, by the first cache server (108), a response to the update command to the cache management server (107),
wherein the seventh step includes updating, by the third cache server (110), the third lock management information so as to add the information on the lock state of the first file which has been received from the first cache server (108),
wherein the eighth step includes updating, by the cache management server (107), the authority information after receiving the response to the update command from the first cache server (108),
**characterised in that** the first cache server (108) comprises first access management information for determining whether or not an access from one of the first client terminal (109) and another one of the cache servers (106, 110) is to a file to which access is currently suspended,
wherein the second cache server (106) is coupled to a second client terminal, and comprises second access management information for determining whether or not an access from one of the second client terminal and another one of the cache servers (108, 110) is to a file to which access is currently suspended,
wherein the third cache server (110) is coupled to a third client terminal (111), and comprises third access management information for determining whether or not an access from one of the third client terminal (111) and another one of the cache servers (106, 108) is to a file to which access is currently suspended,
wherein the sixth step includes:
updating, by the first cache server (108), the first access management information so as to add information on the first file;
referring, by the first cache server (108), to the first access management information to determine whether or not an access to the one of the plurality of files is a command to process the first file, the access is received from the one of the first client terminal (109) and the another one of the cache servers (106, 110), in a case where the first cache server (108) receives the command to process one of the plurality of files from the one of the first client terminal (109) and the another one of the cache servers (106, 110) after the first access management information is updated;
temporarily placing, by the first cache server (108), the command to process the first file in a queue, in a case where the access to the one of the plurality of files is determined as the command to process the first file;
sending, by the first cache server (108), an access resumption command which instructs the third cache server (110) to start granting access to the first file after the first lock management information is updated so that the extracted information on the lock state of the first file migrates to the third cache server (110); and
updating, by the first cache server (108), the first access management information so as to delete the information on the first file after the access resumption command is sent, and executing the command to process the first file which has been received from the one of the first client terminal (109) and the another one of the cache servers (106, 110) and temporarily placed in the queue, and
wherein the seventh step includes:
updating, by the third cache server (110), the third access management information so as to add the information on the first file after the update command is received from the first cache server (108);
referring, by the third cache server (110), to the third access management information to determine whether or not a command to process the one of the plurality of files is the command to process the first file, the command is received from the one of the third client terminal (111) and the another one of the cache servers (106, 108), in a case where the third cache server (110) receives the command to process one of the plurality of files from the one of the third client terminal (111) and the another one of the cache servers (106, 108);
temporarily placing, by the third cache server (110), the command to process the first file in a queue, in a case where it is determined that the command to process the one of the plurality of files is the command to process the first file; and
updating, by the third cache server (110), the third access management information so as to delete the added information on the first file after the access resumption command is received, and executing the command to process the first file which has been received from the one of the third client terminal (111) and the another one of the cache servers (106, 108) and temporarily placed in the queue.

5. The method of data cache management according to claim 4,
wherein the authority information includes an authority control table storing information that associates a subdirectory of a file system with one of the cache servers (106, 108, 110),
wherein the first lock management information, the second lock management information, and the third lock management information each include a lock management table (416) which stores an identifier of one of the plurality of files, a user name of a user who has acquired a lock on the one of the plurality of files, and identification information of the acquired lock,
wherein the first access management information, the second access management information, and the third access management information each include an access management table (417) which stores the subdirectory of the file system,
wherein the one of the cache servers (106, 108, 110) has the administration right of a plurality of files under the subdirectory that is registered in the authority control table, and
wherein the one of the cache servers (106, 108, 110) temporarily places, in a queue, commands to process the plurality of files under the subdirectory that is registered in the access management table (417).

6. The method of data cache management according to claim 4 or 5,
wherein the cache management server (107) calculates, for the each of the plurality of files, a number of times of access during execution of the command to process, and
wherein, based on a condition about the number of times of the access during the execution of the command to process which is input to the cache management server (107), the update command is sent to the first cache server (108).

7. The method of data cache management according to claim 4,
wherein the cache management server (107) manages time of the computer system,
wherein the cache management server (107) comprises time information for changing which of the cache servers (106, 108, 110) holds the administration right, based on the time of the computer system, and
wherein the fifth step comprises sending, by the cache management server (107), after the time of the computer system that is indicated by the time information elapses, the update command to the first cache server (108).

## Patentansprüche

1. Computersystem mit
einem Dateiserver (105), der dazu ausgelegt ist, mehrere Dateien zu speichern,
Cacheservern (106, 108, 110), die jeweils dazu ausgelegt sind, Cachedaten der mehreren Dateien zu speichern, und
einem Cacheverwaltungsserver (107), der dazu ausgelegt ist, die Cacheserver (106, 108, 110) zu verwalten,
wobei
der Dateiserver (105) einen ersten Prozessor (200) und einen mit dem ersten Prozessor (200) verbundenen ersten Speicher (210) aufweist,
jeder Cacheserver (106, 108, 110) einen zweiten Prozessor (400) und einen mit dem zweiten Prozessor (400) verbundenen zweiten Speicher (410) aufweist, und
der Cacheverwaltungsserver (107) einen dritten Prozessor (300) und einen mit dem dritten Prozessor (300) verbundenen dritten Speicher (310) aufweist,
wobei die Cachedaten einer der mehreren Dateien Daten, die zum Identifizieren der einen der mehreren Dateien verwendbar sind und/oder Daten, die die eine der mehreren Dateien darstellen, enthalten,
wobei der Cacheverwaltungsserver (107) dazu ausgelegt ist, Kompetenzinformation zu verwalten, die anzeigt, welcher der Cacheserver (106, 108, 110) ein Administrationsrecht über die Cachedaten jeder der in dem Dateiserver (105) gespeicherten mehreren Dateien hat,
wobei die Cacheserver (106, 108, 110) einen ersten Cacheserver (108), einen zweiten Cacheserver (106) und einen dritten Cacheserver (110) umfassen,
wobei der erste Cacheserver (108) eine erste Sperrverwaltungsinformation aufweist, um einen Sperrzustand zu verwalten, der anzeigt, ob eine Datei, deren Administrationsrecht durch den ersten Cacheserver (108) gehalten wird, zugänglich oder unzugänglich ist,
wobei der zweite Cacheserver (106) eine zweite Sperrverwaltungsinformation aufweist, um einen Sperrzustand zu verwalten, der anzeigt, ob eine Datei, deren Administrationsrecht durch den zweiten Cacheserver (106) gehalten wird, zugänglich oder unzugänglich ist,
wobei der dritte Cacheserver (110) eine dritte Sperrverwaltungsinformation aufweist, um einen Sperrzustand zu verwalten, der anzeigt, ob eine Datei, deren Administrationsrecht durch den dritten Cacheserver (110) gehalten wird, zugänglich oder unzugänglich ist,
wobei die mehreren Dateien eine erste Datei umfassen,
wobei der erste Cacheserver (108) dazu ausgelegt ist, die Kompetenzinformation von dem Cacheverwaltungsserver (107) zu erhalten, wenn ein Befehl zum Verarbeiten der ersten Datei von einem ersten Client-Endgerät (109) erhalten wird, das mit dem ersten Cacheserver (108) verbunden ist,
wobei der erste Cacheserver (108) dazu ausgelegt ist, auf die erhaltene Kompetenzinformation Bezug zu nehmen, um festzustellen, ob der erste Cacheserver (108) das Administrationsrecht von Cachedaten der ersten Datei hat,
wobei der erste Cacheserver (108) dazu ausgelegt ist, den Befehl zum Verarbeiten der ersten Datei auszuführen, falls festgestellt wird, dass der erste Cacheserver (108) das Administrationsrecht der Cachedaten der ersten Datei hat,
wobei der erste Cacheserver (108) dazu ausgelegt ist, den Befehl zum Verarbeiten der ersten Datei an den zweiten Cacheserver (106) zu senden, der das Administrationsrecht der ersten Datei hat, und von dem zweiten Cacheserver (106) ein Ergebnis der Ausführung des Befehls zum Verarbeiten der ersten Datei zu empfangen, falls festgestellt wird, dass der erste Cacheserver (108) nicht das Administrationsrecht der Cachedaten der ersten Datei hat,
wobei der Cacheverwaltungsserver (107) dazu ausgelegt ist, einen Aktualisierungsbefehl an den ersten Cacheserver (108) zu senden, um das Administrationsrechts der Cachedaten der ersten Datei, das durch den ersten Cacheserver (108) gehalten wurde, an den dritten Cacheserver (110) zu übertragen,
wobei der erste Cacheserver (108) dazu ausgelegt ist, den Aktualisierungsbefehl nach Erhalt des Aktualisierungsbefehls an den dritten Cacheserver (110) zu senden, und eine erste Aktualisierungsprozedur durchzuführen, in der die erste Sperrverwaltungsinformation aktualisiert wird, so dass Information über einen Sperrzustand der ersten Datei zu dem dritten Cacheserver (110) migriert wird,
wobei der dritte Cacheserver (110) dazu ausgelegt ist, eine zweite Aktualisierungsprozedur durchzuführen, in der die dritte Sperrverwaltungsinformation aktualisiert wird, so dass die Information über den Sperrzustand der ersten Datei nach Erhalt des Aktualisierungsbefehls zu dem dritten Cacheserver (110) migriert wird,
wobei der Cacheverwaltungsserver (107) dazu ausgelegt ist, die Kompetenzinformation zu aktualisieren, so dass das Administrationsrecht der Cachedaten der ersten Datei von dem ersten Cacheserver (108) auf den dritten Cacheserver (110) übergeht,
wobei in der ersten Aktualisierungsprozedur:
die Information über den Sperrzustand der ersten Datei aus der ersten Sperrverwaltungsinformation extrahiert wird;
die erste Sperrverwaltungsinformation aktualisiert wird, so dass die extrahierte Information über den Sperrzustand der ersten Datei gelöscht wird;
die extrahierte Information über den Sperrzustand der ersten Datei an den dritten Cacheserver (110) gesendet wird; und
eine Antwort auf den Aktualisierungsbefehl an den Cacheverwaltungsserver (107) gesendet wird,
wobei in der zweiten Aktualisierungsprozedur die dritte Sperrverwaltungsinformation aktualisiert wird, so dass die Information über den Sperrzustand der ersten Datei hinzugefügt wird, die von dem ersten Cacheserver (108) erhalten wurde,
wobei der Cacheverwaltungsserver (107) dazu ausgelegt ist, die Kompetenzinformation zu aktualisieren, nachdem die Antwort auf den Aktualisierungsbefehl von dem ersten Cacheserver (108) erhalten wurde,
**dadurch gekennzeichnet, dass** der erste Cacheserver (108) eine erste Zugriffsverwaltungsinformation aufweist, um festzustellen, ob ein Zugriff von dem ersten Client-Endgerät (109) oder einem anderen der Cacheserver (106, 110) auf eine Datei erfolgt, deren Zugriff gegenwärtig ausgesetzt ist,
wobei der zweite Cacheserver (106) an ein zweites Client-Endgerät angeschlossen ist und eine zweite Zugriffsverwaltungsinformation aufweist, um festzustellen, ob ein Zugriff von dem zweiten Client-Endgerät oder einem anderen der Cacheserver (108, 110) auf eine Datei erfolgt, deren Zugriff gegenwärtig ausgesetzt ist,
wobei der dritte Cacheserver (110) an ein drittes Client-Endgerät (111) angeschlossen ist und eine dritte Zugriffsverwaltungsinformation aufweist, um festzustellen, ob ein Zugriff von dem dritten Client-Endgerät (111) oder einem anderen der Cacheserver (106, 108) auf eine Datei erfolgt, deren Zugriff gegenwärtig ausgesetzt ist,
wobei in der ersten Aktualisierungsprozedur:
die erste Zugriffsverwaltungsinformation aktualisiert wird, so dass Information über die erste Datei hinzugefügt wird;
auf die erste Zugriffsverwaltungsinformation Bezug genommen wird, um festzustellen, ob ein Zugriff auf die eine der mehreren Dateien ein Befehl zum Verarbeiten der ersten Datei ist, wobei der Zugriff von dem ersten Client-Endgerät (109) oder dem anderen der Cacheserver (106, 110) empfangen wurde, falls der erste Cacheserver (108) den Befehl zum Verarbeiten einer der mehreren Dateien von dem ersten Client-Endgerät (109) oder dem anderen der Cacheserver (106, 110) empfängt, nachdem die erste Zugriffsverwaltungsinformation aktualisiert wurde;
der Befehl zum Verarbeiten der ersten Datei temporär in einer Warteschlange platziert wird, falls der Zugriff auf die eine der mehreren Dateien als der Befehl zum Verarbeiten der ersten Datei bestimmt wird;
ein Zugriffswiederaufnahmebefehl gesendet wird, der dem dritten Cacheserver (110) befiehlt, mit der Erlaubnis des Zugriffs auf die erste Datei zu beginnen, nachdem die erste Sperrverwaltungsinformation aktualisiert wurde, so dass die extrahierte Information über den Sperrzustand der ersten Datei zu dem dritten Cacheserver (110) migriert wird; und
die erste Zugriffsverwaltungsinformation aktualisiert wird, so dass die hinzugefügte Information über die erste Datei gelöscht wird, nachdem der Zugriffswiederaufnahmebefehl gesendet wurde, und der Befehl zum Verarbeiten der ersten Datei ausgeführt wird, der von dem ersten Client-Endgerät (109) oder dem anderen der Cacheserver (106, 110) empfangen und temporär in der Warteschlange platziert wurde, und
wobei in der zweiten Aktualisierungsprozedur:
die dritte Zugriffsverwaltungsinformation aktualisiert wird, so dass die Information über die erste Datei hinzugefügt wird, nachdem der Aktualisierungsbefehl von dem ersten Cacheserver (108) empfangen wurde;
auf die dritte Zugriffsverwaltungsinformation Bezug genommen wird, um festzustellen, ob ein Befehl zum Verarbeiten der einen der mehreren Dateien der Befehl zum Verarbeiten der ersten Datei ist, wobei der Befehl von dem dritten Client-Endgerät (111) oder dem anderen der Cacheserver (106, 108) empfangen wurde, falls der dritte Cacheserver (110) den Befehl zum Verarbeiten einer der mehreren Dateien von dem dritten Client-Endgerät (111) oder dem anderen der Cacheserver (106, 108) empfängt;
der Befehl zum Verarbeiten der ersten Datei temporär in einer Warteschlange platziert wird, falls festgestellt wird, dass der Befehl zum Verarbeiten der einen der mehreren Dateien der Befehl zum Verarbeiten der ersten Datei ist; und
die dritte Zugriffsverwaltungsinformation aktualisiert wird, so dass die Information über die erste Datei nach Empfang des Zugriffswiederaufnahmebefehls gelöscht wird, und der Befehl zum Verarbeiten der ersten Datei ausgeführt wird, der von dem dritten Client-Endgerät (111) oder dem anderen der Cacheserver (106, 108) empfangen und temporär in der Warteschlange platziert wurde.

2. Computersystem nach Anspruch 1,
wobei die Kompetenzinformation eine Kompetenzsteuerungstabelle enthält, die dazu ausgelegt ist, Information zu speichern, die ein Unterverzeichnis eines Dateisystems mit einem der Cacheserver (106, 108, 110) in Beziehung setzt,
wobei die erste Sperrverwaltungsinformation, die zweite Sperrverwaltungsinformation und die dritte Sperrverwaltungsinformation jeweils eine Sperrverwaltungstabelle (416) aufweisen, die dazu ausgelegt ist, eine Kennung von einer der mehreren Dateien, einen Benutzernamen eines Benutzers, der eine Sperrung der einen der mehreren Dateien erwirkt hat, und eine Identifikationsinformation der erwirkten Sperrung zu speichern,
wobei die erste Zugriffsverwaltungsinformation, die zweite Zugriffsverwaltungsinformation und die dritte Zugriffsverwaltungsinformation jeweils eine Zugriffsverwaltungstabelle (417) aufweisen, die dazu ausgelegt ist, das Unterverzeichnis des Dateisystems zu speichern,
wobei der eine der Cacheserver (106, 108, 110) das Administrationsrecht der mehreren Dateien unter dem Unterverzeichnis hat, das in der Kompetenzsteuerungstabelle registriert ist, und
wobei der eine der Cacheserver (106, 108, 110) dazu ausgelegt ist, Befehle zum Verarbeiten der mehreren Dateien unter dem Unterverzeichnis, das in der Zugriffsverwaltungstabelle (417) registriert ist, in einer Warteschlange zu platzieren.

3. Computersystem nach Anspruch 1 oder 2,
wobei der Cacheverwaltungsserver (107) dazu ausgelegt ist, für jede der mehreren Dateien eine Anzahl von Zugriffen während der Ausführung des Verarbeitungsbefehls zu berechnen, und
wobei auf Grundlage einer durch den Cacheverwaltungsserver (107) eingegebenen Bedingung über die Anzahl von Zugriffen während der Ausführung des Verarbeitungsbefehls der Aktualisierungsbefehl zu dem ersten Cacheserver (108) gesendet wird.

4. Verfahren zur Datencacheverwaltung für ein Computersystem mit
einem Dateiserver (105), der mehrere Dateien speichert,
Cacheservern (106, 108, 110), die jeweils Cachedaten der mehreren Dateien speichern, und
einem Cacheverwaltungsserver (107), der die Cacheserver (106, 108, 110) verwaltet,
wobei
der Dateiserver (105) einen ersten Prozessor (200) und einen mit dem ersten Prozessor (200) verbundenen ersten Speicher (210) aufweist,
jeder Cacheserver (106, 108, 110) einen zweiten Prozessor (400) und einen mit dem zweiten Prozessor (400) verbundenen zweiten Speicher (410) aufweist, und
der Cacheverwaltungsserver (107) einen dritten Prozessor (300) und einen mit dem dritten Prozessor (300) verbundenen dritten Speicher (310) aufweist,
wobei die Cachedaten einer der mehreren Dateien Daten, die zum Identifizieren der einen der mehreren Dateien verwendbar sind und/oder Daten, die die eine der mehreren Dateien darstellen, enthalten,
wobei der Cacheverwaltungsserver (107) Kompetenzinformation verwaltet, die anzeigt, welcher der Cacheserver (106, 108, 110) ein Administrationsrecht über die Cachedaten jeder der in dem Dateiserver (105) gespeicherten mehreren Dateien hat,
wobei die Cacheserver (106, 108, 110) einen ersten Cacheserver (108), einen zweiten Cacheserver (106) und einen dritten Cacheserver (110) umfassen,
wobei der erste Cacheserver (108) eine erste Sperrverwaltungsinformation aufweist, um einen Sperrzustand zu verwalten, der anzeigt, ob eine Datei, deren Administrationsrecht durch den ersten Cacheserver (108) gehalten wird, zugänglich oder unzugänglich ist,
wobei der zweite Cacheserver (106) eine zweite Sperrverwaltungsinformation aufweist, um einen Sperrzustand zu verwalten, der anzeigt, ob eine Datei, deren Administrationsrecht durch den zweiten Cacheserver (106) gehalten wird, zugänglich oder unzugänglich ist,
wobei der dritte Cacheserver (110) eine dritte Sperrverwaltungsinformation aufweist, um einen Sperrzustand zu verwalten, der anzeigt, ob eine Datei, deren Administrationsrecht durch den dritten Cacheserver (110) gehalten wird, zugänglich oder unzugänglich ist,
wobei die mehreren Dateien eine erste Datei umfassen,
wobei in dem Verfahren zur Datencacheverwaltung:
in einem ersten Schritt durch den ersten Cacheserver (108) die Kompetenzinformation von dem Cacheverwaltungsserver (107) erhalten wird, wenn ein Befehl zum Verarbeiten der ersten Datei von einem ersten Client-Endgerät (109) erhalten wird, das mit dem ersten Cacheserver (108) verbunden ist,
in einem zweiten Schritt durch den ersten Cacheserver (108) auf die erhaltene Kompetenzinformation Bezug genommen wird, um festzustellen, ob der erste Cacheserver (108) das Administrationsrecht von Cachedaten der ersten Datei hat,
in einem dritten Schritt durch den ersten Cacheserver (108) der Befehl zum Verarbeiten der ersten Datei ausgeführt wird, falls festgestellt wird, dass der erste Cacheserver (108) das Administrationsrecht der Cachedaten der ersten Datei hat,
in einem vierten Schritt durch den ersten Cacheserver (108) der Befehl zum Verarbeiten der ersten Datei an den zweiten Cacheserver (106) gesendet wird, der das Administrationsrecht der ersten Datei hat, und von dem zweiten Cacheserver (106) ein Ergebnis der Ausführung des Befehls zum Verarbeiten der ersten Datei empfangen wird, falls festgestellt wird, dass der erste Cacheserver (108) nicht das Administrationsrecht der Cachedaten der ersten Datei hat,
in einem fünften Schritt durch den Cacheverwaltungsserver (107) ein Aktualisierungsbefehl an den ersten Cacheserver (108) gesendet wird, um das Administrationsrechts der Cachedaten der ersten Datei, das durch den ersten Cacheserver (108) gehalten wurde, an den dritten Cacheserver (110) zu übertragen,
in einem sechsten Schritt durch den ersten Cacheserver (108) der Aktualisierungsbefehl nach Erhalt des Aktualisierungsbefehls an den dritten Cacheserver (110) gesendet wird, und eine erste Aktualisierungsprozedur durchgeführt wird, in der die erste Sperrverwaltungsinformation aktualisiert wird, so dass Information über einen Sperrzustand der ersten Datei zu dem dritten Cacheserver (110) migriert wird,
in einem siebten Schritt durch den dritten Cacheserver (110) eine zweite Aktualisierungsprozedur durchgeführt wird, in der die dritte Sperrverwaltungsinformation aktualisiert wird, so dass die Information über den Sperrzustand der ersten Datei nach Erhalt des Aktualisierungsbefehls zu dem dritten Cacheserver (110) migriert wird, und
in einem achten Schritt durch den Cacheverwaltungsserver (107) die Kompetenzinformation aktualisiert wird, so dass das Administrationsrecht der Cachedaten der ersten Datei von dem ersten Cacheserver (108) auf den dritten Cacheserver (110) übergeht,
wobei in dem sechsten Schritt:
durch den ersten Cacheserver (108) die Information über den Sperrzustand der ersten Datei aus der ersten Sperrverwaltungsinformation extrahiert wird;
durch den ersten Cacheserver (108) die erste Sperrverwaltungsinformation aktualisiert wird, so dass die extrahierte Information über den Sperrzustand der ersten Datei gelöscht wird;
durch den ersten Cacheserver (108) die extrahierte Information über den Sperrzustand der ersten Datei an den dritten Cacheserver (110) gesendet wird; und
durch den ersten Cacheserver (108) eine Antwort auf den Aktualisierungsbefehl an den Cacheverwaltungsserver (107) gesendet wird,
wobei in dem siebten Schritt durch den dritten Cacheserver (110) die dritte Sperrverwaltungsinformation aktualisiert wird, so dass die Information über den Sperrzustand der ersten Datei hinzugefügt wird, die von dem ersten Cacheserver (108) erhalten wurde,
wobei in dem achten Schritt durch den Cacheverwaltungsserver (107) die Kompetenzinformation aktualisiert wird, nachdem die Antwort auf den Aktualisierungsbefehl von dem ersten Cacheserver (108) erhalten wurde,
**dadurch gekennzeichnet, dass** der erste Cacheserver (108) eine erste Zugriffsverwaltungsinformation aufweist, um festzustellen, ob ein Zugriff von dem ersten Client-Endgerät (109) oder einem anderen der Cacheserver (106, 110) auf eine Datei erfolgt, deren Zugriff gegenwärtig ausgesetzt ist,
wobei der zweite Cacheserver (106) an ein zweites Client-Endgerät angeschlossen ist und eine zweite Zugriffsverwaltungsinformation aufweist, um festzustellen, ob ein Zugriff von dem zweiten Client-Endgerät oder einem anderen der Cacheserver (108, 110) auf eine Datei erfolgt, deren Zugriff gegenwärtig ausgesetzt ist,
wobei der dritte Cacheserver (110) an ein drittes Client-Endgerät (111) angeschlossen ist und eine dritte Zugriffsverwaltungsinformation aufweist, um festzustellen, ob ein Zugriff von dem dritten Client-Endgerät (111) oder einem anderen der Cacheserver (106, 108) auf eine Datei erfolgt, deren Zugriff gegenwärtig ausgesetzt ist,
wobei in dem sechsten Schritt:
durch den ersten Cacheserver (108) die erste Zugriffsverwaltungsinformation aktualisiert wird, so dass Information über die erste Datei hinzugefügt wird;
durch den ersten Cacheserver (108) auf die erste Zugriffsverwaltungsinformation Bezug genommen wird, um festzustellen, ob ein Zugriff auf die eine der mehreren Dateien ein Befehl zum Verarbeiten der ersten Datei ist, wobei der Zugriff von dem ersten Client-Endgerät (109) oder dem anderen der Cacheserver (106, 110) empfangen wurde, falls der erste Cacheserver (108) den Befehl zum Verarbeiten einer der mehreren Dateien von dem ersten Client-Endgerät (109) oder dem anderen der Cacheserver (106, 110) empfängt, nachdem die erste Zugriffsverwaltungsinformation aktualisiert wurde;
durch den ersten Cacheserver (108) der Befehl zum Verarbeiten der ersten Datei temporär in einer Warteschlange platziert wird, falls der Zugriff auf die eine der mehreren Dateien als der Befehl zum Verarbeiten der ersten Datei bestimmt wird;
durch den ersten Cacheserver (108) ein Zugriffswiederaufnahmebefehl gesendet wird, der dem dritten Cacheserver (110) befiehlt, mit der Erlaubnis des Zugriffs auf die erste Datei zu beginnen, nachdem die erste Sperrverwaltungsinformation aktualisiert wurde, so dass die extrahierte Information über den Sperrzustand der ersten Datei zu dem dritten Cacheserver (110) migriert wird; und
durch den ersten Cacheserver (108) die erste Zugriffsverwaltungsinformation aktualisiert wird, so dass die hinzugefügte Information über die erste Datei gelöscht wird, nachdem der Zugriffswiederaufnahmebefehl gesendet wurde, und der Befehl zum Verarbeiten der ersten Datei ausgeführt wird, der von dem ersten Client-Endgerät (109) oder dem anderen der Cacheserver (106, 110) empfangen und temporär in der Warteschlange platziert wurde, und
wobei in dem siebten Schritt:
durch den dritten Cacheserver (110) die dritte Zugriffsverwaltungsinformation aktualisiert wird, so dass die Information über die erste Datei hinzugefügt wird, nachdem der Aktualisierungsbefehl von dem ersten Cacheserver (108) empfangen wurde;
durch den dritten Cacheserver (110) auf die dritte Zugriffsverwaltungsinformation Bezug genommen wird, um festzustellen, ob ein Befehl zum Verarbeiten der einen der mehreren Dateien der Befehl zum Verarbeiten der ersten Datei ist, wobei der Befehl von dem dritten Client-Endgerät (111) oder dem anderen der Cacheserver (106, 108) empfangen wurde, falls der dritte Cacheserver (110) den Befehl zum Verarbeiten einer der mehreren Dateien von dem dritten Client-Endgerät (111) oder dem anderen der Cacheserver (106, 108) empfängt;
durch den dritten Cacheserver (110) der Befehl zum Verarbeiten der ersten Datei temporär in einer Warteschlange platziert wird, falls festgestellt wird, dass der Befehl zum Verarbeiten der einen der mehreren Dateien der Befehl zum Verarbeiten der ersten Datei ist; und
durch den dritten Cacheserver (110) die dritte Zugriffsverwaltungsinformation aktualisiert wird, so dass die hinzugefügte Information über die erste Datei nach Empfang des Zugriffswiederaufnahmebefehls gelöscht wird, und der Befehl zum Verarbeiten der ersten Datei ausgeführt wird, der von dem dritten Client-Endgerät (111) oder dem anderen der Cacheserver (106, 108) empfangen und temporär in der Warteschlange platziert wurde.

5. Verfahren zur Datencacheverwaltung nach Anspruch 4,
wobei die Kompetenzinformation eine Kompetenzsteuerungstabelle enthält, die Information speichert, die ein Unterverzeichnis eines Dateisystems mit einem der Cacheserver (106, 108, 110) in Beziehung setzt,
wobei die erste Sperrverwaltungsinformation, die zweite Sperrverwaltungsinformation und die dritte Sperrverwaltungsinformation jeweils eine Sperrverwaltungstabelle (416) aufweisen, die eine Kennung von einer der mehreren Dateien, einen Benutzernamen eines Benutzers, der eine Sperrung der einen der mehreren Dateien erwirkt hat, und eine Identifikationsinformation der erwirkten Sperrung speichert,
wobei die erste Zugriffsverwaltungsinformation, die zweite Zugriffsverwaltungsinformation und die dritte Zugriffsverwaltungsinformation jeweils eine Zugriffsverwaltungstabelle (417) aufweisen, die das Unterverzeichnis des Dateisystems speichert,
wobei der eine der Cacheserver (106, 108, 110) das Administrationsrecht der mehreren Dateien unter dem Unterverzeichnis hat, das in der Kompetenzsteuerungstabelle registriert ist, und
wobei der eine der Cacheserver (106, 108, 110) Befehle zum Verarbeiten der mehreren Dateien unter dem Unterverzeichnis, das in der Zugriffsverwaltungstabelle (417) registriert ist, in einer Warteschlange platziert.

6. Verfahren zur Datencacheverwaltung nach Anspruch 4 oder 5,
wobei der Cacheverwaltungsserver (107) für jede der mehreren Dateien eine Anzahl von Zugriffen während der Ausführung des Verarbeitungsbefehls berechnet, und
wobei auf Grundlage einer durch den Cacheverwaltungsserver (107) eingegebenen Bedingung über die Anzahl von Zugriffen während der Ausführung des Verarbeitungsbefehls der Aktualisierungsbefehl zu dem ersten Cacheserver (108) gesendet wird.

7. Verfahren zur Datencacheverwaltung nach Anspruch 4,
wobei der Cacheverwaltungsserver (107) die Zeit des Computersystems verwaltet,
wobei der Cacheverwaltungsserver (107) Zeitinformation enthält, um basierend auf der Zeit des Computersystems zu ändern, welcher der Cacheserver (106, 108, 110) das Administrationsrecht hält, und
wobei in dem fünften Schritt durch den Cacheverwaltungsserver (107), nachdem die Zeit des Computersystems verstrichen ist, die durch die Zeitinformation angezeigt wird, der Aktualisierungsbefehl zu dem ersten Cacheserver (108) gesendet wird.

## Revendications

1. Système informatique, incluant :
un serveur de fichiers (105) lequel est apte à stocker une pluralité de fichiers ;
des serveurs de cache (106, 108, 110) dont chacun est apte à stocker des données de cache de la pluralité de fichiers ; et
un serveur de gestion de cache (107) lequel est apte à gérer les serveurs de cache (106, 108, 110) ;
dans lequel :
le serveur de fichiers (105) comporte un premier processeur (200) et une première mémoire (210) couplée au premier processeur (200) ;
chaque serveur de cache (106, 108, 110) comporte un deuxième processeur (400) et une deuxième mémoire (410) couplée au deuxième processeur (400) ; et
le serveur de gestion de cache (107) comporte un troisième processeur (300) et une troisième mémoire (310) couplée au troisième processeur (300) ;
dans lequel les données de cache d'un fichier de la pluralité de fichiers incluent au moins l'une des données parmi des données qui peuvent être utilisées en vue d'identifier le fichier de la pluralité de fichiers et des données qui constituent le fichier de la pluralité de fichiers ;
dans lequel le serveur de gestion de cache (107) est apte à gérer des informations d'autorité indiquant quel serveur, parmi les serveurs de cache (106, 108, 110), dispose d'un droit d'administration sur les données de cache de chaque fichier de la pluralité de fichiers stockés dans le serveur de fichiers (105) ;
dans lequel les serveurs de cache (106, 108, 110) incluent un premier serveur de cache (108), un deuxième serveur de cache (106), et un troisième serveur de cache (110) ;
dans lequel le premier serveur de cache (108) comporte des premières informations de gestion de verrou destinées à gérer un état de verrou qui indique l'un des états parmi une accessibilité et une inaccessibilité d'un fichier avec le droit d'administration connexe détenu par le premier serveur de cache (108) ;
dans lequel le deuxième serveur de cache (106) comporte des deuxièmes informations de gestion de verrou destinées à gérer un état de verrou qui indique l'un des états parmi une accessibilité et une inaccessibilité d'un fichier avec le droit d'administration connexe détenu par le deuxième serveur de cache (106) ;
dans lequel le troisième serveur de cache (110) comporte des troisièmes informations de gestion de verrou destinées à gérer un état de verrou qui indique l'un des états parmi une accessibilité et une inaccessibilité d'un fichier avec le droit d'administration connexe détenu par le troisième serveur de cache (110) ;
dans lequel la pluralité de fichiers inclut un premier fichier ;
dans lequel le premier serveur de cache (108) est apte à obtenir les informations d'autorité auprès du serveur de gestion de cache (107), dans le cas de la réception d'une commande visant à traiter le premier fichier, en provenance d'un premier terminal client (109) couplé au premier serveur de cache (108) ;
dans lequel le premier serveur de cache (108) est apte à faire référence aux informations d'autorité obtenues en vue de déterminer si le premier serveur de cache (108) dispose ou non du droit d'administration de données de cache du premier fichier ;
dans lequel le premier serveur de cache (108) est apte à exécuter la commande visant à traiter le premier fichier, dans un cas où il est déterminé que le premier serveur de cache (108) dispose du droit d'administration des données de cache du premier fichier ;
dans lequel le premier serveur de cache (108) est apte à envoyer la commande visant à traiter le premier fichier, au deuxième serveur de cache (106), lequel dispose du droit d'administration du premier fichier, et à recevoir, à partir du deuxième serveur de cache (106), un résultat d'exécution de la commande visant à traiter le premier fichier, dans un cas où il est déterminé que le premier serveur de cache (108) ne dispose pas du droit d'administration des données de cache du premier fichier ;
dans lequel le serveur de gestion de cache (107) est apte à envoyer, au premier serveur de cache (108), une commande de mise à jour visant à transférer le droit d'administration des données de cache du premier fichier, lequel a été détenu par le premier serveur de cache (108), au troisième serveur de cache (110) ;
dans lequel le premier serveur de cache (108) est apte à envoyer la commande de mise à jour au troisième serveur de cache (110), suite à la réception de la commande de mise à jour, et à exécuter une première procédure de mise à jour dans laquelle les premières informations de gestion de verrou sont mises à jour, de sorte que des informations sur un état de verrou du premier fichier migrent vers le troisième serveur de cache (110) ;
dans lequel le troisième serveur de cache (110) est apte à exécuter une deuxième procédure de mise à jour, dans laquelle les troisièmes informations de gestion de verrou sont mises à jour, de sorte que les informations sur l'état de verrou du premier fichier migrent vers le troisième serveur de cache (110), suite à la réception de la commande de mise à jour ;
dans lequel le serveur de gestion de cache (107) est apte à mettre à jour les informations d'autorité, de sorte que le droit d'administration des données de cache du premier fichier est transféré du premier serveur de cache (108) au troisième serveur de cache (110) ;
dans lequel la première procédure de mise à jour inclut les étapes ci-dessous consistant à :
extraire les informations sur l'état de verrou du premier fichier des premières informations de gestion de verrou ;
mettre à jour les premières informations de gestion de verrou, de manière à supprimer les informations extraites sur l'état de verrou du premier fichier ;
envoyer les informations extraites sur l'état de verrou du premier fichier au troisième serveur de cache (110) ; et
envoyer une réponse à la commande de mise à jour au serveur de gestion de cache (107) ;
dans lequel la deuxième procédure de mise à jour consiste à mettre à jour les troisièmes informations de gestion de verrou, de manière à ajouter les informations sur l'état de verrou du premier fichier qui a été reçu à partir du premier serveur de cache (108) ;
dans lequel le serveur de gestion de cache (107) est apte à mettre à jour les informations d'autorité après que la réponse à la commande de mise à jour a été reçue à partir du premier serveur de cache (108) ;
**caractérisé en ce que** le premier serveur de cache (108) comporte des premières informations de gestion d'accès destinées à déterminer si un accès à partir de l'un parmi le premier terminal client (109) et un autre des serveurs de cache (106, 110) concerne ou non un fichier pour lequel l'accès est suspendu à cet instant ;
dans lequel le deuxième serveur de cache (106) est couplé à un deuxième terminal client, et comporte des deuxièmes informations de gestion d'accès destinées à déterminer si un accès à partir de l'un parmi le deuxième terminal client et un autre des serveurs de cache (108, 110) concerne ou non un fichier pour lequel l'accès est suspendu à cet instant ;
dans lequel le troisième serveur de cache (110) est couplé à un troisième terminal client (111), et comporte des troisièmes informations de gestion d'accès destinées à déterminer si un accès à partir de l'un parmi le troisième terminal client (111) et un autre des serveurs de cache (106, 108) concerne ou non un fichier pour lequel l'accès est suspendu à cet instant ;
dans lequel la première procédure de mise à jour inclut les étapes ci-dessous consistant à :
mettre à jour les premières informations de gestion d'accès, de manière à ajouter des informations sur le premier fichier ;
faire référence aux premières informations de gestion d'accès, en vue de déterminer si un accès au fichier de la pluralité de fichiers correspond ou non à une commande visant à traiter le premier fichier, l'accès étant reçu à partir de l'un parmi le premier terminal client (109) et ledit un autre des serveurs de cache (106, 110), dans un cas où le premier serveur de cache (108) reçoit la commande visant à traiter un fichier de la pluralité de fichiers à partir dudit un parmi le premier terminal client (109) et ledit un autre des serveurs de cache (106, 110), après que les premières informations de gestion d'accès ont été mises à jour ;
placer temporairement la commande visant à traiter le premier fichier dans une file d'attente, dans un cas où l'accès au fichier de la pluralité de fichiers est déterminé comme correspondant à la commande visant à traiter le premier fichier ;
envoyer une commande de reprise d'accès laquelle ordonne au troisième serveur de cache (110) de commencer à octroyer un accès au premier fichier, après que les premières informations de gestion de verrou sont mises à jour, de sorte que les informations extraites sur l'état de verrou du premier fichier migrent vers le troisième serveur de cache (110) ; et
mettre à jour les premières informations de gestion d'accès de manière à supprimer les informations ajoutées sur le premier fichier après que la commande de reprise d'accès a été envoyée, et exécuter la commande visant à traiter le premier fichier qui a été reçue à partir dudit un parmi le premier terminal client (109) et ledit un autre des serveurs de cache (106, 110), et placée temporairement dans la file d'attente ; et
dans lequel la deuxième procédure de mise à jour inclut les étapes ci-dessous consistant à :
mettre à jour les troisièmes informations de gestion d'accès, de manière à ajouter les informations sur le premier fichier après que la commande de mise à jour a été reçue à partir du premier serveur de cache (108) ;
faire référence aux troisièmes informations de gestion d'accès, en vue de déterminer si une commande visant à traiter le fichier de la pluralité de fichiers correspond ou non à la commande visant à traiter le premier fichier, la commande étant reçue à partir dudit un parmi le troisième terminal client (111) et ledit un autre des serveurs de cache (106, 108), dans un cas où le troisième serveur de cache (110) reçoit la commande visant à traiter un fichier de la pluralité de fichiers à partir dudit un parmi le troisième terminal client (111) et ledit un autre des serveurs de cache (106, 108) ;
placer temporairement la commande visant à traiter le premier fichier dans une file d'attente, dans un cas où il est déterminé que la commande visant à traiter le fichier de la pluralité de fichiers correspond à la commande visant à traiter le premier fichier ; et
mettre à jour les troisièmes informations de gestion d'accès, de manière à supprimer les informations sur le premier fichier après que la commande de reprise d'accès a été reçue, et exécuter la commande visant à traiter le premier fichier qui a été reçue à partir dudit un parmi le troisième terminal client (111) et ledit un autre des serveurs de cache (106, 108), et placée temporairement dans la file d'attente.

2. Système informatique selon la revendication 1,
dans lequel les informations d'autorité incluent une table de contrôle d'autorité laquelle est apte à stocker des informations qui associent un sous-répertoire d'un système de fichiers à l'un des serveurs de cache (106, 108, 110) ;
dans lequel les premières informations de gestion de verrou, les deuxièmes informations de gestion de verrou, et les troisièmes informations de gestion de verrou incluent chacune une table de gestion de verrous (416) laquelle est apte à stocker un identifiant d'un fichier de la pluralité de fichiers, un nom d'utilisateur d'un utilisateur qui a acquis un verrou sur le fichier de la pluralité de fichiers, et des informations d'identification du verrou acquis ;
dans lequel les premières informations de gestion d'accès, les deuxièmes informations de gestion d'accès, et les troisièmes informations de gestion d'accès incluent chacune une table de gestion des accès (417) laquelle est apte à stocker le sous-répertoire du système de fichiers ;
dans lequel ledit un serveur des serveurs de cache (106, 108, 110) dispose du droit d'administration d'une pluralité de fichiers sous le sous-répertoire qui est enregistré dans la table de contrôle d'autorité ; et
dans lequel ledit un serveur des serveurs de cache (106, 108, 110) est apte à placer temporairement, dans une file d'attente, des commandes visant à traiter la pluralité de fichiers sous le sous-répertoire qui est enregistré dans la table de gestion des accès (417).

3. Système informatique selon la revendication 1 ou 2,
dans lequel le serveur de gestion de cache (107) est apte à calculer, pour ledit chaque fichier de la pluralité de fichiers, un nombre d'occurrences d'accès au cours de l'exécution de la commande de traitement ; et
dans lequel, sur la base d'une condition relative au nombre d'occurrences de l'accès au cours de l'exécution de la commande de traitement qui est appliquée au serveur de gestion de cache (107), la commande de mise à jour est envoyée au premier serveur de cache (108).

4. Procédé de gestion de cache de données pour un système informatique incluant :
un serveur de fichiers (105) qui stocke une pluralité de fichiers ;
des serveurs de cache (106, 108, 110) qui stockent chacun des données de cache de la pluralité de fichiers ; et
un serveur de gestion de cache (107) qui gère les serveurs de cache (106, 108, 110), dans lequel :
le serveur de fichiers (105) comporte un premier processeur (200) et une première mémoire (210) couplée au premier processeur (200) ;
chaque serveur de cache (106, 108, 110) comporte un deuxième processeur (400) et une deuxième mémoire (410) couplée au deuxième processeur (400) ; et
le serveur de gestion de cache (107) comporte un troisième processeur (300) et une troisième mémoire (310) couplée au troisième processeur (300) ;
dans lequel les données de cache d'un fichier de la pluralité de fichiers incluent au moins l'une des données parmi des données qui peuvent être utilisées en vue d'identifier le fichier de la pluralité de fichiers et des données qui constituent le fichier de la pluralité de fichiers ;
dans lequel le serveur de gestion de cache (107) gère des informations d'autorité indiquant quel serveur, parmi les serveurs de cache (106, 108, 110), dispose d'un droit d'administration sur les données de cache de chaque fichier de la pluralité de fichiers stockés dans le serveur de fichiers (105) ;
dans lequel les serveurs de cache (106, 108, 110) incluent un premier serveur de cache (108), un deuxième serveur de cache (106), et un troisième serveur de cache (110) ;
dans lequel le premier serveur de cache (108) comporte des premières informations de gestion de verrou destinées à gérer un état de verrou qui indique l'un des états parmi une accessibilité et une inaccessibilité d'un fichier avec le droit d'administration connexe détenu par le premier serveur de cache (108) ;
dans lequel le deuxième serveur de cache (106) comporte des deuxièmes informations de gestion de verrou destinées à gérer un état de verrou qui indique l'un des états parmi une accessibilité et une inaccessibilité d'un fichier avec le droit d'administration connexe détenu par le deuxième serveur de cache (106) ;
dans lequel le troisième serveur de cache (110) comporte des troisièmes informations de gestion de verrou destinées à gérer un état de verrou qui indique l'un des états parmi une accessibilité et une inaccessibilité d'un fichier avec le droit d'administration connexe détenu par le troisième serveur de cache (110) ;
dans lequel la pluralité de fichiers inclut un premier fichier ;
le procédé de gestion de cache de données incluant :
une première étape consistant à obtenir, par le biais du premier serveur de cache (108), les informations d'autorité auprès du serveur de gestion de cache (107), dans le cas de la réception d'une commande visant à traiter le premier fichier en provenance d'un premier terminal client (109) couplé au premier serveur de cache (108) ;
une deuxième étape consistant à faire référence, par le biais du premier serveur de cache (108), aux informations d'autorité obtenues, en vue de déterminer si le premier serveur de cache (108) dispose ou non du droit d'administration de données de cache du premier fichier ;
une troisième étape consistant à exécuter, par le biais du premier serveur de cache (108), la commande visant à traiter le premier fichier, dans un cas où il est déterminé que le premier serveur de cache (108) dispose du droit d'administration des données de cache du premier fichier ;
une quatrième étape consistant à envoyer, par le biais du premier serveur de cache (108), la commande visant à traiter le premier fichier, au deuxième serveur de cache (106), lequel dispose du droit d'administration du premier fichier, et à recevoir, à partir du deuxième serveur de cache (106), un résultat d'exécution de la commande visant à traiter le premier fichier, dans un cas où il est déterminé que le premier serveur de cache (108) ne dispose pas du droit d'administration des données de cache du premier fichier ;
une cinquième étape consistant à envoyer, par le biais du serveur de gestion de cache (107), au premier serveur de cache (108), une commande de mise à jour visant à transférer le droit d'administration des données de cache du premier fichier, lequel a été détenu par le premier serveur de cache (108), au troisième serveur de cache (110) ;
une sixième étape consistant à envoyer, par le biais du premier serveur de cache (108), la commande de mise à jour, au troisième serveur de cache (110), suite à la réception de la commande de mise à jour, et à exécuter une première procédure de mise à jour dans laquelle les premières informations de gestion de verrou sont mises à jour, de sorte que des informations sur un état de verrou du premier fichier migrent vers le troisième serveur de cache (110) ;
une septième étape consistant à exécuter, par le biais du troisième serveur de cache (110), une deuxième procédure de mise à jour dans laquelle les troisièmes informations de gestion de verrou sont mises à jour, de sorte que les informations sur l'état de verrou du premier fichier migrent vers le troisième serveur de cache (110) suite à la réception de la commande de mise à jour ; et
une huitième étape consistant à mettre à jour, par le biais du serveur de gestion de cache (107), les informations d'autorité, de sorte que le droit d'administration des données de cache du premier fichier est transféré du premier serveur de cache (108) au troisième serveur de cache (110) ;
dans lequel la sixième étape consiste à :
extraire, par le biais du premier serveur de cache (108), les informations sur l'état de verrou du premier fichier, des premières informations de gestion de verrou ;
mettre à jour, par le biais du premier serveur de cache (108), les premières informations de gestion de verrou, de manière à supprimer les informations extraites sur l'état de verrou du premier fichier ;
envoyer, par le biais du premier serveur de cache (108), les informations extraites sur l'état de verrou du premier fichier, au troisième serveur de cache (110) ; et
envoyer, par le biais du premier serveur de cache (108), une réponse à la commande de mise à jour, au serveur de gestion de cache (107) ;
dans lequel la septième étape consiste à mettre à jour, par le biais du troisième serveur de cache (110), les troisièmes informations de gestion de verrou, de manière à ajouter les informations sur l'état de verrou du premier fichier qui a été reçu à partir du premier serveur de cache (108) ;
dans lequel la huitième étape consiste à mettre à jour, par le biais du serveur de gestion de cache (107), les informations d'autorité suite à la réception de la réponse à la commande de mise à jour, à partir du premier serveur de cache (108) ;
**caractérisé en ce que** le premier serveur de cache (108) comporte des premières informations de gestion d'accès destinées à déterminer si un accès à partir de l'un parmi le premier terminal client (109) et un autre des serveurs de cache (106, 110) concerne ou non un fichier pour lequel l'accès est suspendu à cet instant ;
dans lequel le deuxième serveur de cache (106) est couplé à un deuxième terminal client, et comporte des deuxièmes informations de gestion d'accès destinées à déterminer si un accès à partir de l'un parmi le deuxième terminal client et un autre des serveurs de cache (108, 110) concerne ou non un fichier pour lequel l'accès est suspendu à cet instant ;
dans lequel le troisième serveur de cache (110) est couplé à un troisième terminal client (111), et comporte des troisièmes informations de gestion d'accès destinées à déterminer si un accès à partir de l'un parmi le troisième terminal client (111) et un autre des serveurs de cache (106, 108) concerne ou non un fichier pour lequel l'accès est suspendu à cet instant ;
dans lequel la sixième étape consiste à :
mettre à jour, par le biais du premier serveur de cache (108), les premières informations de gestion d'accès, de manière à ajouter des informations sur le premier fichier ;
faire référence, par le biais du premier serveur de cache (108), aux premières informations de gestion d'accès, en vue de déterminer si un accès au fichier de la pluralité de fichiers correspond ou non à une commande visant à traiter le premier fichier, l'accès étant reçu à partir de l'un parmi le premier terminal client (109) et ledit un autre des serveurs de cache (106, 110), dans un cas où le premier serveur de cache (108) reçoit la commande visant à traiter un fichier de la pluralité de fichiers à partir dudit un parmi le premier terminal client (109) et ledit un autre des serveurs de cache (106, 110), après que les premières informations de gestion d'accès ont été mises à jour ;
placer temporairement, par le biais du premier serveur de cache (108), la commande visant à traiter le premier fichier dans une file d'attente, dans un cas où l'accès au fichier de la pluralité de fichiers est déterminé comme correspondant à la commande visant à traiter le premier fichier ;
envoyer, par le biais du premier serveur de cache (108), une commande de reprise d'accès, laquelle ordonne au troisième serveur de cache (110) de commencer à octroyer un accès au premier fichier, après que les premières informations de gestion de verrou sont mises à jour, de sorte que les informations extraites sur l'état de verrou du premier fichier migrent vers le troisième serveur de cache (110) ; et
mettre à jour, par le biais du premier serveur de cache (108), les premières informations de gestion d'accès, de manière à supprimer les informations sur le premier fichier après que la commande de reprise d'accès a été envoyée, et exécuter la commande visant à traiter le premier fichier qui a été reçue, à partir dudit un parmi le premier terminal client (109) et ledit un autre des serveurs de cache (106, 110), et placée temporairement dans la file d'attente ; et
dans lequel la septième étape consiste à :
mettre à jour, par le biais du troisième serveur de cache (110), les troisièmes informations de gestion d'accès, de manière à ajouter les informations sur le premier fichier, après que la commande de mise à jour a été reçue à partir du premier serveur de cache (108) ;
faire référence, par le biais du troisième serveur de cache (110), aux troisièmes informations de gestion d'accès, en vue de déterminer si une commande visant à traiter le fichier de la pluralité de fichiers correspond ou non à la commande visant à traiter le premier fichier, la commande étant reçue à partir dudit un parmi le troisième terminal client (111) et ledit un autre des serveurs de cache (106, 108), dans un cas où le troisième serveur de cache (110) reçoit la commande visant à traiter un fichier de la pluralité de fichiers, à partir dudit un parmi le troisième terminal client (111) et ledit un autre des serveurs de cache (106, 108) ;
placer temporairement, par le biais du troisième serveur de cache (110), la commande visant à traiter le premier fichier, dans une file d'attente, dans un cas où il est déterminé que la commande visant à traiter le fichier de la pluralité de fichiers correspond à la commande visant à traiter le premier fichier ; et
mettre à jour, par le biais du troisième serveur de cache (110), les troisièmes informations de gestion d'accès, de manière à supprimer les informations ajoutées sur le premier fichier, après que la commande de reprise d'accès a été reçue, et exécuter la commande visant à traiter le premier fichier qui a été reçue à partir dudit un parmi le troisième terminal client (111) et ledit un autre des serveurs de cache (106, 108), et placée temporairement dans la file d'attente.

5. Procédé de gestion de cache de données selon la revendication 4,
dans lequel les informations d'autorité incluent une table de contrôle d'autorité stockant des informations qui associent un sous-répertoire d'un système de fichiers à l'un des serveurs de cache (106, 108, 110) ;
dans lequel les premières informations de gestion de verrou, les deuxièmes informations de gestion de verrou, et les troisièmes informations de gestion de verrou incluent chacune une table de gestion de verrous (416) qui stocke un identifiant d'un fichier de la pluralité de fichiers, un nom d'utilisateur d'un utilisateur qui a acquis un verrou sur le fichier de la pluralité de fichiers, et des informations d'identification du verrou acquis ;
dans lequel les premières informations de gestion d'accès, les deuxièmes informations de gestion d'accès, et les troisièmes informations de gestion d'accès incluent chacune une table de gestion des accès (417) qui stocke le sous-répertoire du système de fichiers ;
dans lequel ledit un serveur des serveurs de cache (106, 108, 110) dispose du droit d'administration d'une pluralité de fichiers sous le sous-répertoire qui est enregistré dans la table de contrôle d'autorité ; et
dans lequel ledit un serveur des serveurs de cache (106, 108, 110) place temporairement, dans une file d'attente, des commandes visant à traiter la pluralité de fichiers sous le sous-répertoire qui est enregistré dans la table de gestion des accès (417).

6. Procédé de gestion de cache de données selon la revendication 4 ou 5,
dans lequel le serveur de gestion de cache (107) calcule, pour ledit chaque fichier de la pluralité de fichiers, un nombre d'occurrences d'accès au cours de l'exécution de la commande de traitement ; et
dans lequel, sur la base d'une condition relative au nombre d'occurrences de l'accès au cours de l'exécution de la commande de traitement qui est appliquée au serveur de gestion de cache (107), la commande de mise à jour est envoyée au premier serveur de cache (108).

7. Procédé de gestion de cache de données selon la revendication 4,
dans lequel le serveur de gestion de cache (107) gère l'heure du système informatique ;
dans lequel le serveur de gestion de cache (107) comporte des informations temporelles pour modifier le serveur qui, parmi les serveurs de cache (106, 108, 110), détient le droit d'administration, sur la base de l'heure du système informatique ; et
dans lequel la cinquième étape consiste à envoyer, par le biais du serveur de gestion de cache (107), dès lors que l'heure du système informatique indiquée par les informations temporelles est écoulée, la commande de mise à jour au premier serveur de cache (108).
